# EUROPEAN PATENT APPLICATION

(11) **EP 4 826 848 A1**
(43) Date of publication of application: **21.10.2026**
(21) Application number: 26172337.3
(22) Date of filing: 14.04.2026
(51) Int. Cl.: H01M 10/613, H01M 10/625, H01M 10/647, H01M 10/658, H01M 50/249, H01M 50/30, H01M 50/367

(54) **THERMAL PROPAGATION CONTAINMENT FOR A BATTERY PACK**

(30) Priority: 15.04.2025 US 202563789096 P
(71) Applicant: Cummins Inc., Columbus, IN 47201 (US)
(72) Inventor: Sexton, Peter, Columbus, 47201 (US); Junaidi, Haroon Ahmed, Milton Keynes, MK13 8PE (GB); Quinn, Simon, Columbus, 47201 (US); Wu, Miaolei, Coventry, CV4 8EN (GB); Ganapathy, Ashok Kumar, Columbus, 47201 (US); Rayner, Neil, Columbus, 47201 (US); Cooke, Will, Columbus, 47201 (US)
(74) Representative: Cleveland Scott York

(57) **Abstract**

The present invention relates to thermal management systems for batteries, particularly batteries used in electric vehicles (EVs), stationary generators, or other high-performance energy storage applications. An energy storage device including a major component that includes first and second major subcomponents configured to interconnect at a thermally isolable interface arranged therebetween. The first and second major subcomponents being constituent components of an electrochemical system that is configured to store energy for the energy storage device and cooled via fluid flow in a primary outlet direction across the thermally isolable interface. The first and second major subcomponents being arranged such that the first major subcomponent is thermally isolable from the second major subcomponent for a minimum isolation duration when the energy storage device experiences a detrimental thermal event.

## Description

### CROSS-REFERENCE TO RELATED APPLICATIONS

This application claims the benefit of U.S. Provisional Patent Application No. 63/789,096, titled "IMMERSIVE COOLING SYSTEM FOR BATTERIES", filed April 15, 2025, the entirety disclosure of which is of which is incorporated herein by reference.

### TECHNICAL FIELD

The present disclosure relates generally to energy storage systems and, more particularly, to thermal management architectures for modular electrochemical battery assemblies. The disclosure specifically concerns systems, devices, methods, and kits for thermal isolation, gas flow control, and propagation mitigation within battery packs, including those used in electric vehicles (EVs), grid-connected stationary storage units, aerospace applications, and industrial power systems.

### BACKGROUND

Electrochemical energy storage systems, particularly those utilizing lithium-ion cells, are increasingly deployed in applications requiring high power density and operational reliability. However, these systems are vulnerable to thermal runaway events, in which localized cell failure may propagate to neighboring cells or modules, resulting in catastrophic heat release, mechanical damage, and hazardous gas emission. Traditional thermal management techniques-including bulk cooling systems and passive insulation-often fail to adequately isolate or contain such events. Moreover, fixed venting paths and monolithic system structures can lead to uncontrolled propagation, pressure buildup, or damage to adjacent components. There remains a need for modular, configurable systems capable of dynamically responding to evolving thermal conditions, managing heat and gas flow with precision, and enabling localized containment and safe venting. Furthermore, existing systems do not provide sufficient flexibility to adapt thermal mitigation strategies to different regulatory or operational environments.

### SUMMARY

The present invention relates to thermal management systems for batteries, particularly batteries used in electric vehicles (EVs), stationary generators, or other high-performance energy storage applications.

The present invention relates to thermal management systems for batteries, particularly batteries used in electric vehicles (EVs), stationary generators, or other high-performance energy storage applications. In various embodiments, the invention provides systems, devices, methods, and kits configured to manage thermal energy and gas flow within a modular battery pack architecture. The invention includes a thermoelectrical barrier that forms a primary thermal isolation interface between major subcomponents, delaying or restricting thermal transfer to neighboring modules. The system may further incorporate modular flow-routing features, mesh-based thermal interfaces, compressible baffles, and sensor-enabled control loops to facilitate dynamic cooling and fault response.

The invention also provides venting subsystems with weakened casing regions aligned with manifold apertures to ensure predictable pressure relief and directional gas flow. Within the manifold, features such as internal baffles, gas-impermeable barriers, and particulate retention meshes promote controlled discharge of high-temperature gases and debris. Configurable inlet and outlet geometries allow the fluid management system to be adapted to specific use cases, offering single or multiple fluid pathways with zoned or fully distributed cooling strategies. Kits may include interchangeable components-such as insulation layers, flow diverters, and vent designs-enabling application-specific customization of thermal mitigation measures and compliance with jurisdictional standards. Collectively, these features support improved safety, modularity, and serviceability in energy storage systems exposed to thermal risk. Advantages and features of the embodiments of this disclosure will become more apparent from the following detailed description of exemplary embodiments when viewed in conjunction with the accompanying drawings.

### BRIEF DESCRIPTION OF THE DRAWINGS

FIG. 1 is a schematic diagram of a dual-axle multi-mode adjustable hybrid vehicle system with integrated front axle;
FIG. 2 is a schematic diagram of an integrated axle;
FIG. 3 is a schematic diagram of another dual-axle multi-mode adjustable hybrid vehicle system with integrated front axle;
FIG. 4 is a schematic diagram of an example of a three-axle multi-mode adjustable hybrid vehicle system with integrated front axle;
FIG. 5 is a schematic diagram of an example of a three-axle multi-mode adjustable hybrid vehicle system with integrated front axle;
FIG. 6 is a schematic diagram of an example of a three-axle multi-mode adjustable hybrid vehicle system with integrated front axle;
FIG. 7 is a schematic diagram of a controller operatively coupled with other components of the system;
FIG. 8 is a side view of a major component of the present disclosure;
FIG. 9 is a top-down view of a major component of the present disclosure;
FIG. 10 is side view of the end of two major components of the present disclosure in a stack;
FIG. 11 is a partial-view of the inside of the external housing of a major component of the present disclosure;
FIG. 12 is a partial-view of a major component of the present disclosure;
FIG. 13 is a view of the external housing of the major component of the present disclosure;
FIG. 14 is a partial view of the electrical matting in the top portion of the major component of the present disclosure;
FIG. 15 is a view of the venting side of a major component of the present disclosure;
FIG. 16 is a direct reproduction of an image of a major component of the present disclosure illustrating where the busbar would connect to each major subcomponent;
FIG. 17 is a view of a mica wrapping/tape covered busbar of the major component of the present disclosure;
FIG. 18 is a view of a silica sleeve covered busbar of the major component of the present disclosure;
FIG. 19 is a direct reproduction of an image of the major component of the present disclosure from the venting side;
FIG. 20A is a heat distribution map of a stack of major components of the present disclosure 2 seconds after a thermal event;
FIG. 20B is a gas streamline map of a stack of major components of the present disclosure 2 seconds after a thermal event;
FIG. 21 is a side view of a stack of major components of the present disclosure;
FIG. 22 is an end view of the stock of major components of FIG. 21;
FIG. 23 is a temperature map of a stack of major components of the present disclosure during a thermal event; and
FIG. 24 is a velocity map of the gas flow within a stack of major components of the present disclosure during a thermal event.

### DETAILED DESCRIPTION

For the purposes of promoting an understanding of the principles of the present disclosure, reference is now made to the embodiments illustrated in the drawings, which are described below. The exemplary embodiments disclosed herein are not intended to be exhaustive or to limit the disclosure to the precise form disclosed in the following detailed description. Rather, these exemplary embodiments were chosen and described so that others skilled in the art may utilize their teachings. It is not beyond the scope of this disclosure to have a number (e.g., all) the features in a given embodiment to be used across all embodiments.

As backdrop, described herein are devices, systems, and method related to the use of energy storage systems ("ESS"), such both mobile and stationary ESSes. A mobile ESS includes a group of devices (e.g., battery cells and/or battery modules) assembled together that is capable of storing energy for later supplying electrical energy. A mobile ESS is capable of being moved (e.g., in on- and/or off-highway applications) and typically used as a temporary source of electrical power. Often arranged in a battery storage array, mobile ESSes vary in size from handheld to about the size of a semi-trailer with the most prevalent type being lithium-ion battery energy storage systems. Typical use cases for mobile ESSes are to provide emergency backup power, supplementing electric vehicle charging stations (e.g., during high demand), or any other application where electrical power is needed.

Stationary ESSes are designed to store energy and release it at a later point in time as electrical energy (e.g., to power equipment, including mobile ESSes). In most cases, a stationary ESS will include an array of batteries (including "second use" batteries mobile ESSes), an electronic control system, inverter, and thermal management system within an enclosure. Stationary ESSes are often deployed in utility scale energy storage systems (e.g., by utilities, power producers, and grid operators) to address a range of customer challenges including intermittent renewables, peak demand and short outages, and enhancement of power grid stability. Other uses of stationary ESSes include commercial building applications where energy costs are significant and/or the continuity of operations is extremely critical as well as applications where uninterrupted power supply is desired in the event of an outage, while backup power generators are starting up (e.g., to supplement loads that have significant voltage and frequency fluctuation).

Notably, principles of the present disclosure provide a variety of desirable advantages. To begin, gains in battery life and total cost of ownership can be realized by implementing these principles. In terms of thermal management, gains in efficiency can also be achieved by targeting specific zones of battery cells. Being selective in this and other manners improves the agility of the thermal management system to better accommodate abrupt, extreme operational or ambient conditions, experienced by the battery, for example. These advantages are desirable among manufacturers and suppliers, striving to achieve better total cost of ownership, improve performance, and thermal safety for electrified vehicle applications.

Electrified vehicles are a type of transportation technology that utilizes electricity as its main source of power. This technology is becoming increasingly popular due to its environmental benefits and cost-effectiveness. Electrified vehicles include fully electric vehicles, hybrid electric vehicles, and fuel cell electric vehicles. Principles of the present disclosure are applicable in whole or in part to each of these vehicles.

Fully electric vehicles are powered solely by electricity and do not require any gasoline or diesel fuel. These vehicles use rechargeable batteries to store energy, which is then used to power the electric motor. Fully electric vehicles are environmentally friendly, producing zero emissions and requiring less maintenance than traditional gasoline-powered vehicles.

Hybrid electric vehicles combine an electric motor with a gasoline or diesel engine. These vehicles use the electric motor for low-speed driving and the gasoline or diesel engine for high-speed driving. Hybrid electric vehicles are more fuel-efficient than traditional gasoline-powered vehicles and produce lower emissions.

Fuel cell electric vehicles use hydrogen as their main source of energy. The hydrogen is converted into electricity through a fuel cell, which powers the electric motor. Fuel cell electric vehicles produce zero emissions and are highly efficient, making them an environmentally friendly option for transportation. However, the infrastructure for hydrogen fueling stations is still limited, making it difficult for fuel cell electric vehicles to become mainstream.

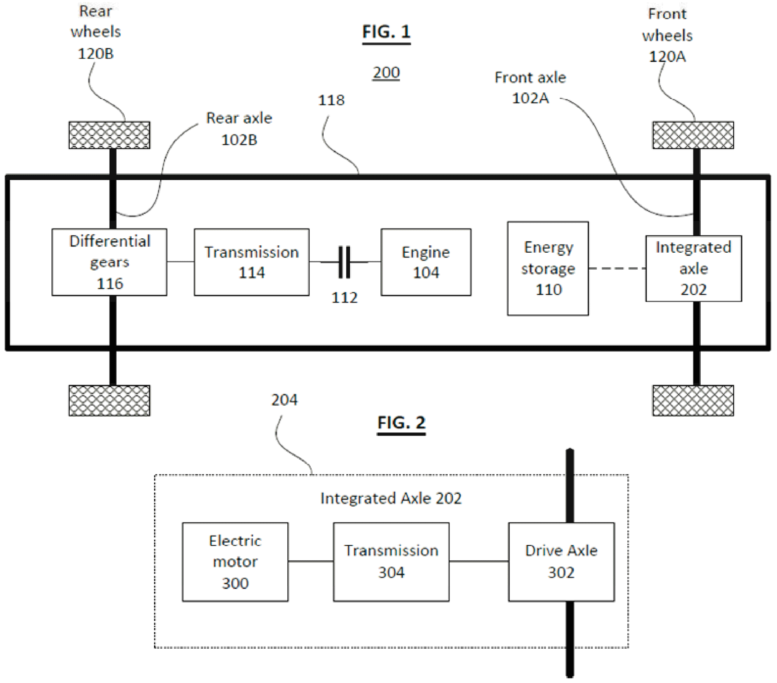

Now turning to the figures, FIG. 1 shows an example of a multi-mode hybrid vehicle system 200 as disclosed herein. The system 200 includes a plurality of motive power sources. For example, an integrated axle 202 is mechanically coupled with a steerable front axle 102A such that the integrated axle 202 is used as a motive power source to provide the motive force to drive the front wheels 120A using electrical energy provided form the energy storage 110. The rear axle 102B is mechanically coupled with the differential gears 116, which is mechanically coupled with the transmission 114, which is mechanically coupled with or decoupled from the engine 104 via the clutch 112. The rear axle 102B, therefore, is controlled using the motive force provided by the engine 104, another power motive source. For simplicity, the inverter(s) for the integrated axle 202 and the fuel reservoir 108 coupled with the engine 104 are not shown.

As disclosed herein, an "integrated axle" includes a type of electric axle drive that is affixed to the wheels to rotate them. In examples, the integrated axle combines the functionality of an electric motor-generator, power electronics such as an inverter, and in some examples a cooling circuit to reduce cost and increase efficiency in a single component. Integrated axles are neither directly nor indirectly coupled with any combustion engine, thereby using solely the motor-generator included therein to provide mechanical power to a drive axle coupled thereto.

In some examples, the motor-generator of the integrated axle may be mounted on the drive axle. In some embodiments, the integrated axle is configured to reduce interfaces and components that may induce efficiency loss. Examples of such components include wires and copper cables that link the components together, plugs, bearings for rotating components, and separate cooling circuits for the electric motor and power electronics. The integrated axles are also more compact than the electric motor, the power electronics, and the cooling circuits therefor being individually installed, thus saving installation space within the chassis frames of the vehicle and allowing more room therein. Each integrated axle is configured independently of other sat(s) in the system. In some examples, the integrated axle may also include a two-speed or three-speed gearbox.

As shown in the embodiment of FIG. 1, the integrated axle 202 is mechanically coupled with a drive axle 102, such as the front axle 102A as shown in FIG. 1. The drive axle 102 is mechanically coupled with a pair of wheels 120, such as the pair of front wheels 120A as shown in FIG. 1. Although not shown, a controller is electrically coupled with the integrated axle 202. Based on the inputs received, the controller turns on (activates or engages) or turns off (deactivates or disengages) one or more of these components to achieve the different modes shown herein. FIG. 2 shows some of the components of the integrated axle 202. For example, the integrated axle 202 includes an electric motor-generator 300, a drive axle 302, and a transmission 304. Other components such as the aforementioned inverter and/or cooling circuit may be included in the integrated axle 202, as suitable. These components are separately or independently operable from the other components (e.g., the transmission 304 is separately operable from the transmission 114). The components of the integrated axle 202 (e.g., the electric motor-generator and at least a portion of the drive axle, etc.) may be mechanically mated to, coupled to, affixed to, or implemented within a common housing 204. The housing may be any suitable structure which supports the positioning of the components, as well as to provide protection of the components.

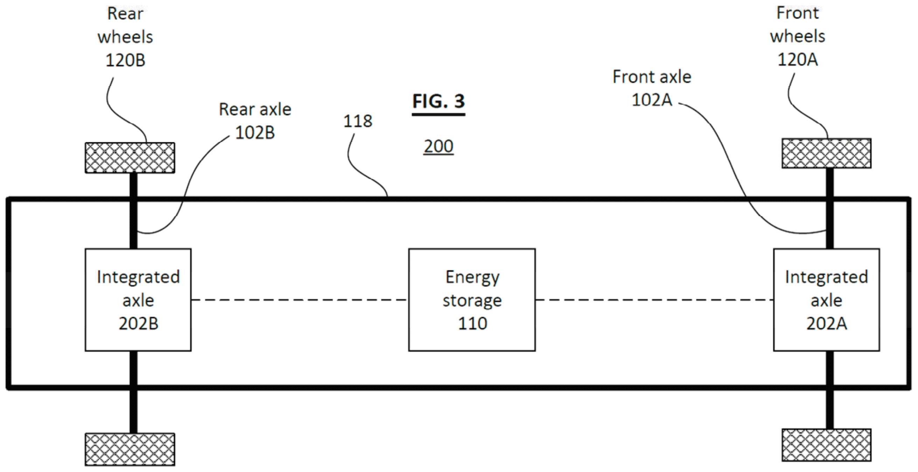

FIG. 3 shows an example of the system 200 which incorporates two integrated axles 202A and 202B, with one implemented for each of the front axle 102A and the rear axle 102B, respectively. The integrated axles 202A and 202B are operated using the controller (not shown) and the electrical energy for these axles are provided by a common energy storage 110, such as a battery or a battery pack. The two integrated axles 202A and 202B may be separately and independently operated so as to be implementable as two separate and distinct motive power sources. Each integrated axle may include the same components, including for example an electric motor and a transmission as explained herein, that are separately operable from each other, although they may be operable together simultaneously as well, as suitably controlled by the controller.

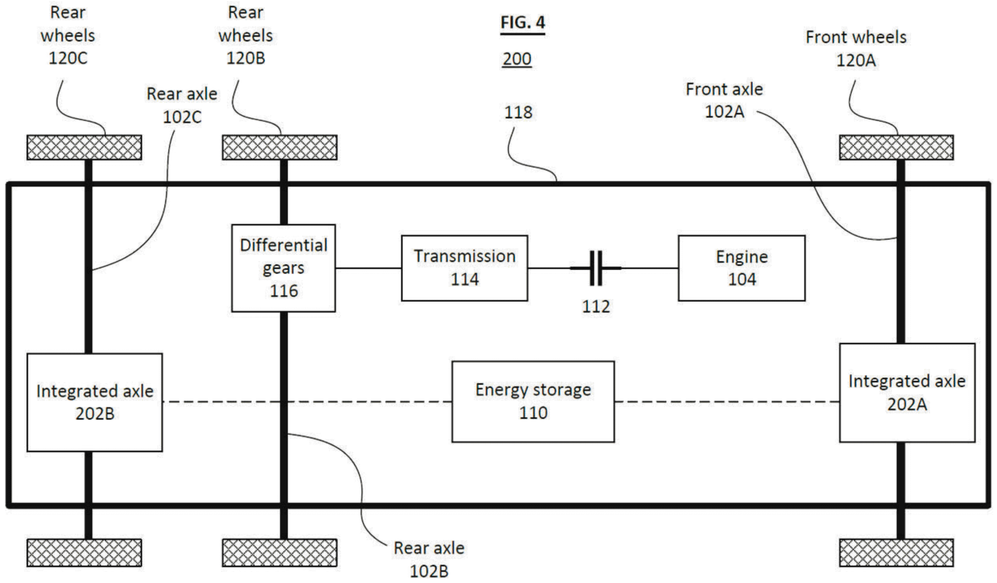

FIGS. 4 through 6 show examples of the system 200 where more than two axles (and in effect, more than four wheels) are implemented, with different combinations of integrated electrical axles and engine-powered axles implemented therein. It is to be understood that these figures are provided for illustrative purposes only, such that any additional number of axles may be implemented according to the need of the vehicle and its operation.

FIG. 4 shows an example of the system 200 which incorporates three axles 102A, 102B, and 102C, of which two of them, the front axle 102A and the rear axle 102C, have integrated axles 202A and 202B, respectively, coupled therewith. The other axle (rear axle) 102B is coupled with the engine 104 via the clutch 112, transmission 114, and differential gears 116 as shown. The integrated axles 202A and 202B are electrically powered by the energy storage 110.

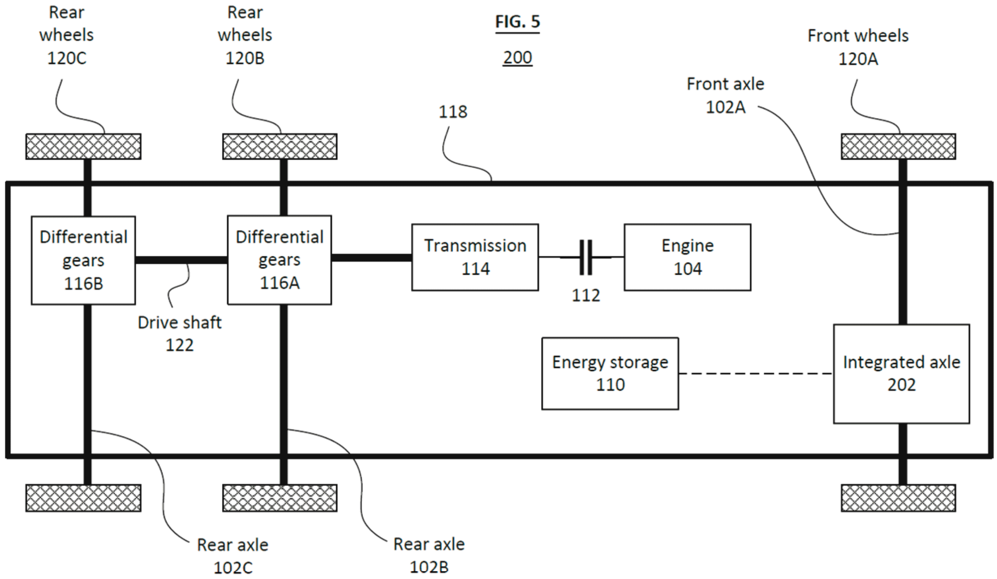

FIG. 5 shows an example of the system 200 with three axles 102A, 102B, and 102C, but instead of two integrated axles, only the front axle 102A is coupled with the integrated axle 202, and the two remaining rear axles 102B and 102C are coupled with differential gears 116A and 116B, respectively. The differential gears 116A and 116B are coupled with each other via the driveshaft 122 which may operate both of the gears simultaneously, using the power provided by the engine 104 and transferred through the transmission 114. As such, the rear axles 102B and 102C may be coupled with each other via the drift shaft 122.

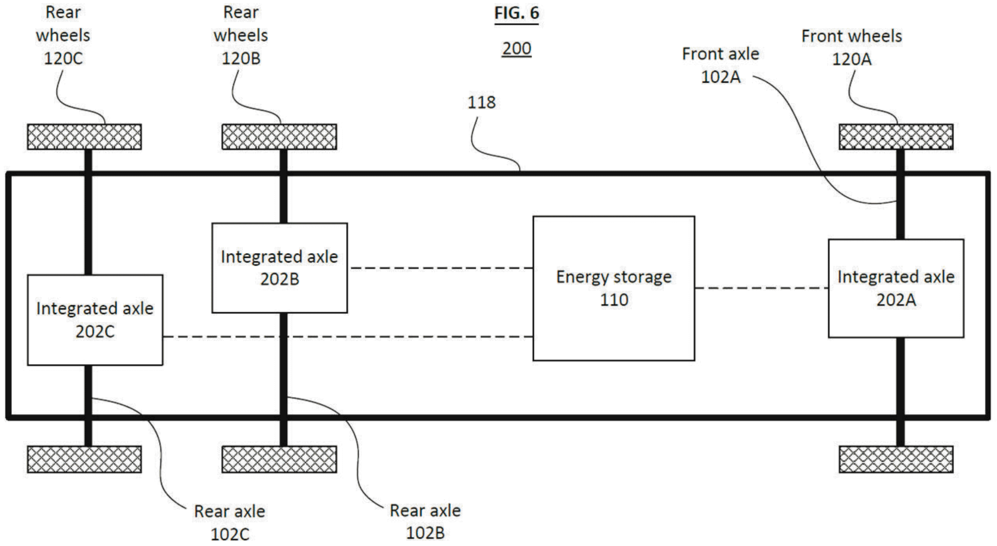

FIG. 6 shows an example of the system 200 with all three axles 102A, 102B, and 102C being powered electrically using the energy storage 110. That is, there are three integrated axles 202A, 202B, and 202C for the three axles, each independently operable, as controlled by a controller (not shown). In all examples disclosed herein, the front axle 102A is always implemented with an integrated axle, but the remaining axles may have integrated axles, engine-powered axles, or a combination of both.

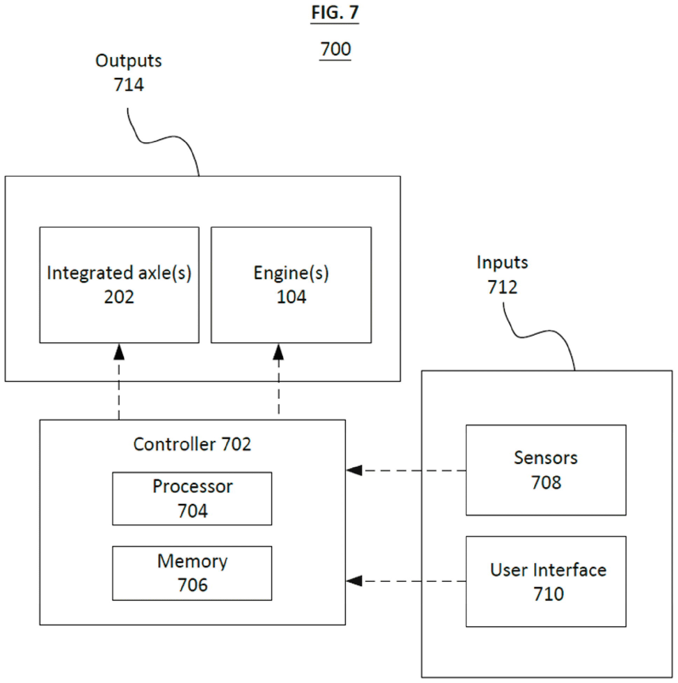

FIG. 7 shows an example of a control system 700 for the multi-mode hybrid vehicle system 200 as disclosed herein. The control system 700 includes a controller (multi-axle system controller) 702 which receives inputs 712 and controls the outputs 714. The controller 702 includes a processor 704 and a memory unit 706. The processor may be a microprocessor, a microcontroller, or any other suitable types of processing device or controller as known in the art. The controller 702 controls the operation of the integrated axle(s) 202 and engines 104 over communication lines, for example. It should be understood, however, that communication between controller and the integrated axle(s) and engine(s) may alternatively, or in addition, be performed wirelessly.

It should be understood that, in some embodiments, the controller 702 may form a portion of a processing subsystem including one or more computing devices having non-transient computer readable storage media, processors or processing circuits, and communication hardware. The controller 702 may be a single device or a distributed device, and the functions of the controller may be performed by hardware and/or by processing instructions stored on non-transient machine-readable storage media. Example processors include an application specific integrated circuit (ASIC), a field programmable gate array (FPGA), a digital signal processor (DSP), and a microprocessor including firmware. Example non-transient computer readable storage media includes random access memory (RAM), read only memory (ROM), flash memory, hard disk storage, electronically erasable and programmable ROM (EEPROM), electronically programmable ROM (EPROM), magnetic disk storage, and any other medium which can be used to carry or store processing instructions and data structures and which can be accessed by a general purpose or special purpose computer or other processing device.

Certain operations of the controller 702 described herein include operations to interpret and/or to determine one or more parameters. The parameters may be inputs 712 which may be information or data received from sensors 708 and/or user interface 710, among other means of providing inputs. The sensors may be any suitable sensor that can measure any change or increase in the load of the vehicle or the load applied on the vehicle. The sensors may include, but are not limited to, weight sensors which detect the physical weight of the vehicle and/or its cargo, gyroscopes which detect the incline or decline in which the vehicle may be traveling, and altimeters which detect the altitude or change in altitude as the vehicle travels, among others.

Interpreting or determining, as utilized herein, includes receiving sensor values by any method known in the art, including at least receiving values over communication lines, from a datalink, network communication or input device, receiving an electronic signal (e.g. a voltage, frequency, current, or pulse-width-modulation signal) indicative of the value, such as the current and expected loads of a vehicle as well as user's preference or whether the rear axles are approaching or reaching their performance limit, for example, as further explained herein, receiving a computer generated parameter indicative of the value, reading the value from a memory location on a non-transient machine readable storage medium, receiving the value as a run-time parameter by any means known in the art, and/or by receiving a value by which the interpreted parameter can be calculated, and/or by referencing a default value that is interpreted to be the parameter value.

The above-described embodiments of the technology described herein can be implemented in any of numerous ways. For example, the embodiments may be implemented using hardware, software or a combination thereof. When implemented in software, the software code (or software algorithm) can be executed on any suitable processor or collection of processors, whether provided in a single computing device or distributed among multiple computing devices. Such processors may be implemented as integrated circuits, with one or more processors in an integrated circuit component, including commercially available integrated circuit components known in the art by names such as CPU chips, GPU chips, microprocessor, microcontroller, or co-processor. Alternatively, a processor may be implemented in custom circuitry, such as an ASIC, or semicustom circuitry resulting from configuring a programmable logic device. As yet a further alternative, a processor may be a portion of a larger circuit or semiconductor device, whether commercially available, semi-custom or custom. As a specific example, some commercially available microprocessors have multiple cores such that one or a subset of those cores may constitute a processor. Though, a processor may be implemented using circuitry in any suitable format.

Further, it should be appreciated that a computing device may be embodied in any of several forms, such as a rack-mounted computer, a desktop computer, a laptop computer, or a tablet computer. Additionally, a computing device may be embedded in a device not generally regarded as a computing device but with suitable processing capabilities, including a Personal Digital Assistant (PDA), a smart phone or any other suitable portable or fixed electronic device.

Also, a computing device may have one or more input and output devices. These devices can be used, among other things, to present the user interface 710 (which may be an output device as well as an input device). Examples of output devices that can be used to provide a user interface include printers or display screens for visual presentation of output and speakers or other sound generating devices for audible presentation of output. Examples of input devices that can be used for a user interface include keyboards, and pointing devices, such as mice, touch pads, and digitizing tablets. As another example, a computing device may receive input information through speech recognition or in other audible format.

Such computing devices may be interconnected by one or more networks in any suitable form, including as a local area network, a controller area network, or a wide area network, such as an enterprise network or the Internet. Such networks may be based on any suitable technology and may operate according to any suitable protocol and may include wireless networks, wired networks or fiber optic networks.

Also, the various methods or processes outlined herein may be coded as software that is executable on one or more processors that employ any one of a variety of operating systems or platforms. Additionally, such software may be written using any of a number of suitable programming languages and/or programming or scripting tools, and also may be compiled as executable machine language code or intermediate code that is executed on a framework or virtual machine.

In this respect, the disclosed embodiments may be embodied as a computer readable storage medium (or multiple computer readable media) (e.g., a computer memory, one or more floppy discs, compact discs (CD), optical discs, digital video disks (DVD), magnetic tapes, flash memories, circuit configurations in Field Programmable Gate Arrays or other semiconductor devices, or other tangible computer storage medium) encoded with one or more programs that, when executed on one or more computers or other processors, perform methods that implement the various embodiments of the disclosure discussed herein. As is apparent from the foregoing examples, a computer readable storage medium may retain information for a sufficient time to provide computer-executable instructions in a non-transitory form. Such a computer readable storage medium or media can be transportable, such that the program or programs stored thereon can be loaded onto one or more different computers or other processors to implement various aspects of the present disclosure as discussed above. As used herein, the term "computer-readable storage medium" encompasses only a non-transitory computer-readable medium that can be considered to be a manufacture (i.e., article of manufacture) or a machine. Alternatively, or additionally, the disclosure may be embodied as a computer readable medium other than a computer-readable storage medium, such as a propagating signal.

The terms "program" or "software" are used herein in a generic sense to refer to any type of computer code or set of computer-executable instructions that can be employed to program a computing device or other processor to implement various aspects of the present disclosure as discussed above. Additionally, it should be appreciated that according to one aspect of the disclosure, one or more computer programs that when executed perform methods of the present disclosure need not reside on a single computer or processor but may be distributed in a modular fashion amongst a number of different computers or processors to implement various aspects of the present disclosure.

Computer-executable instructions may be in many forms, such as program modules, executed by one or more computers or other devices. Generally, program modules include routines, programs, objects, components, data structures, etc. that perform particular tasks or implement particular abstract data types. Typically, the functionality of the program modules may be combined or distributed as desired in various embodiments.

Also, data structures may be stored in computer-readable media in any suitable form. For simplicity of illustration, data structures may be shown to have fields that are related through location in the data structure. Such relationships may likewise be achieved by assigning storage for the fields with locations in a computer-readable medium that conveys relationship between the fields. However, any suitable mechanism may be used to establish a relationship between information in fields of a data structure, including through the use of pointers, tags or other mechanisms that establish relationship between data elements.

The examples described herein may refer to cell module assemblies and/or battery packs. However, it should be understood that these terms may be used interchangeably in the various examples to refer to a grouping of one or more electrically interconnected electrochemical cells.

The modular nature of the battery pack facilitates ease of integration into various electric vehicle architectures and stationary power applications. Modules can be individually accessed and serviced without disruption to the entire system. This modular accessibility supports streamlined maintenance practices and reduces downtime associated with battery servicing. Moreover, modular replacement of battery cells allows for incremental upgrades as battery technology advances. Thus, modularity ensures long-term adaptability and scalability of the cooling system.

System scalability is a key design consideration, accommodating battery packs ranging from small residential storage solutions to large-scale electric vehicle fleets or grid storage applications. The configuration of fluid conduits and heat exchangers can be scaled proportionally to manage the heat load associated with different battery capacities. Design flexibility ensures optimal thermal management performance across diverse application scenarios. Customizable component sizing supports cost-effective integration across various market segments. This scalability provides versatile applicability and widespread adoption potential.

Future developments may explore integration with advanced battery chemistries and emerging energy storage technologies. Compatibility assessments with novel electrode materials and next-generation battery formats ensure the system's ongoing relevance. Research into further improvements in fluid thermal conductivity and stability continues, driven by evolving battery performance requirements. These future-oriented development initiatives maintain system adaptability and technological advancement.

The present disclosure relates to energy storage systems and, more particularly, to thermally-managed, modular energy storage devices ("major components") comprising one or more electrochemical subcomponents that are mechanically and thermally integrated into a system architecture. In various embodiments, a kit is provided, the kit including one or more components or subassemblies described herein, such as a battery cell stack, thermal interface components, venting manifolds, mesh flow regulators, or fluid-routing enclosures. The kit may be configured to enable the assembly, replacement, or repair of a complete energy storage system or a portion thereof, with components arranged to provide effective thermal isolation, modular interconnectivity, and fluid flow management under both normal operating conditions and thermal fault conditions.

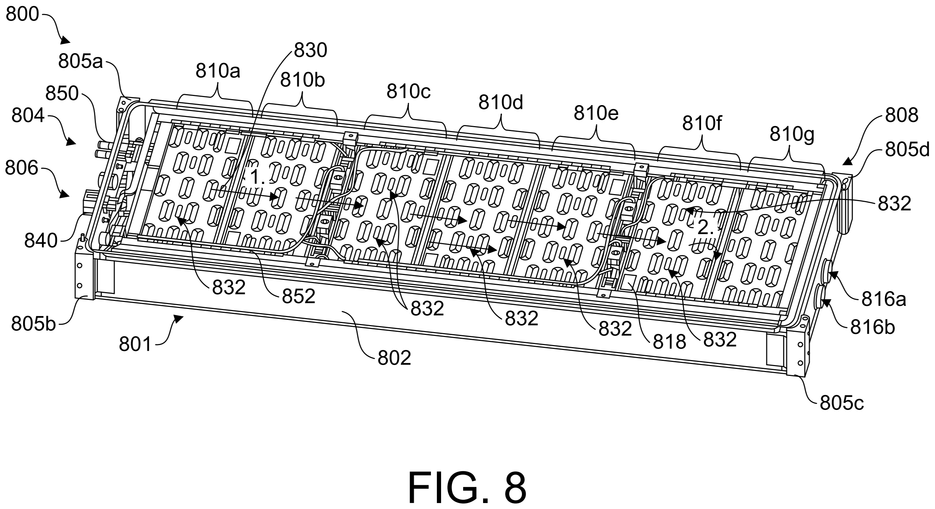

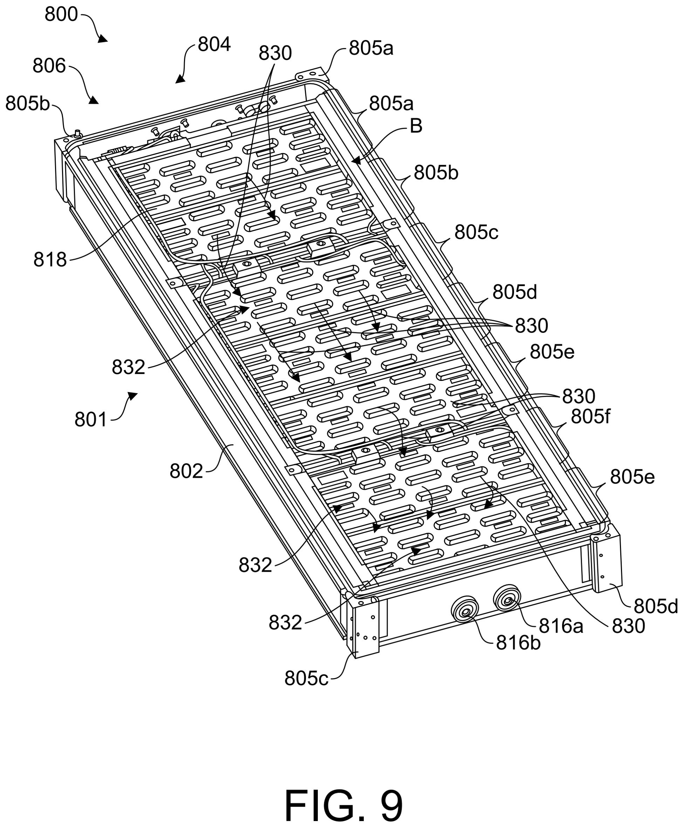

As first shown in FIGS. 8 and 9, the energy storage system described herein includes a major component 800 that comprises at least a first major subcomponent 810a and a second major subcomponent 810b, each of which may be pre-assembled or included individually within the kit. In some embodiments, the major component 800 may comprise a first major subcomponent 810a, a second major subcomponent 810b, a third major subcomponent 810c, a fourth major subcomponent 810d, a fifth major subcomponent 810e, a sixth major subcomponent 810f, and a seventh major subcomponent. For the purposes of simplicity, the disclosure will refer to the first and second major subcomponents 810a and 810b. However, it is understood that the major component 800 may include any number of major subcomponents 810.

The first and second major subcomponents 810a, 810b are arranged to be interconnected at a thermally isolable interface. This interface is configured to restrict or delay thermal transfer for a minimum thermal isolation duration, enabling containment of a detrimental thermal event within a localized subcomponent 810. The subcomponents 810 may house one or more tiers of battery cells, configured to connect in a modular fashion, and may optionally include embedded electrical connectors, routing interfaces, and mechanical alignment features.

The kit may further include a thermal management system 841, including one or more cooling fluid inlets 840, outlets, or conduits. These components are designed to direct a cooling fluid across the thermal interface in a primary outlet direction, where a majority of the fluid continues toward an outlet region or "vent side" 808 at the downstream end of the major component 800. Optional elements in the kit may include angled inlet structures, zoned cooling baffles, or mesh inserts positioned between major subcomponents, each of which contributes to fluid dispersion and thermal performance. These elements may be designed to accommodate compressibility or flexure of the stack during assembly or operation, and may facilitate air or liquid cooling under various operating regimes.

Additionally, the kit may contain a venting manifold 832 or pressure relief system configured to direct gas and debris generated during a thermal event into a predefined containment volume. The manifold 832 may include a weakened region of a module casing aligned with a corresponding relief structure that forms a local entry point. One or more gas exit ports may be provided across the width of the manifold to regulate pressure release and debris capture. A mesh retention feature may be included within the manifold volume to trap particulate material while permitting the controlled flow of vented gases.

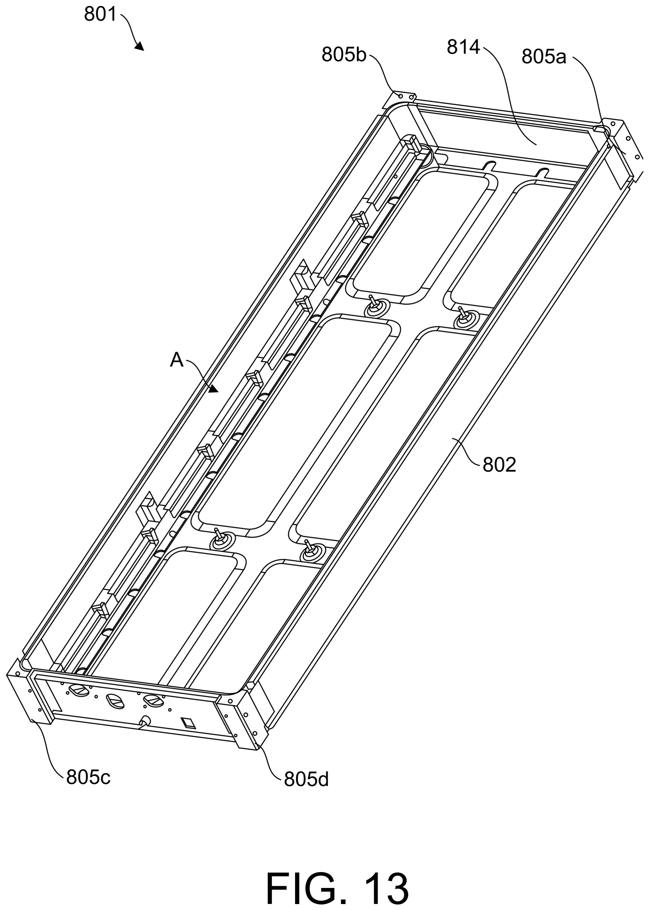

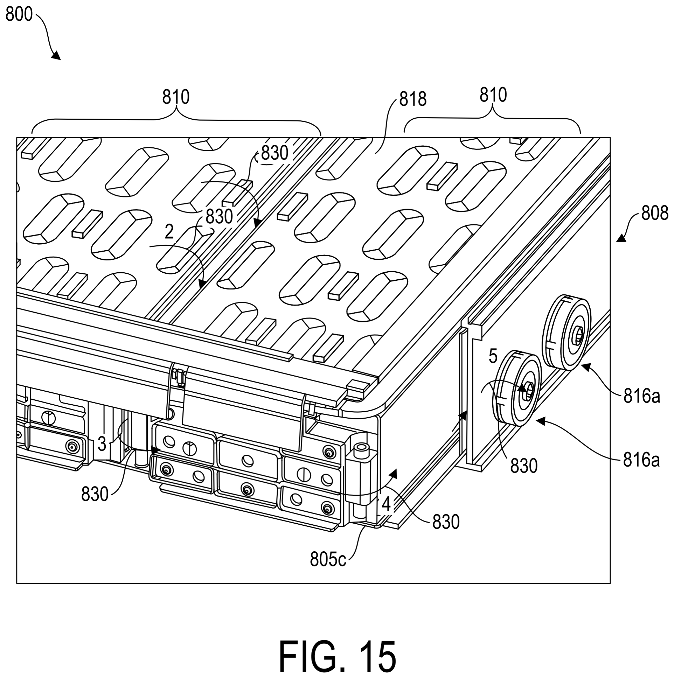

The components in the kit may be configured for direct integration or retrofit into a host structure, and may be used individually or in combination to achieve the thermal, mechanical, and electrical functions described. FIGS. 8 through 24, described below, provide various views and schematic representations of the components that may be included in such a kit, and illustrate example configurations of the thermal interface, fluid routing paths, subcomponent interconnections, and venting systems. The components described are not limited to a single configuration, and variations in geometry, material selection, and assembly method are contemplated within the scope of this disclosure.

FIGs. 8-9, and 19 shows a major component 800 of an energy storage device comprising seven major subcomponents 810a-g. These subcomponents 810a-g are arranged in a stacked configuration and are aligned across a thermally isolable interface covered in a mesh or thermal isolation material 818. A central interconnection feature is present and spans across multiple tiers of the stack, enabling structural continuity and facilitating operational connectivity between layers. The configuration supports integration into an electrochemical system by providing aligned features that receive fluid flow for thermal management. The layout promotes consistent spacing between layers and subcomponents 810a-g, which helps to regulate thermal behavior and facilitate assembly tolerances.

First and second major subcomponents 810a, 810b are joined along a thermally isolable interface. The interface is configured to maintain thermal separation for at least a minimum isolation duration during a detrimental thermal event. A vertically extending conduit is positioned through the stack to support flow distribution and interconnectivity of electrochemical modules. Zoned fluid flow is directed across the interface in a primary outlet direction, and the layers maintain thermal and mechanical continuity without compromising isolation performance. Contact regions and embedded features enable fluid transfer and electrical routing while preserving isolation properties under stress.

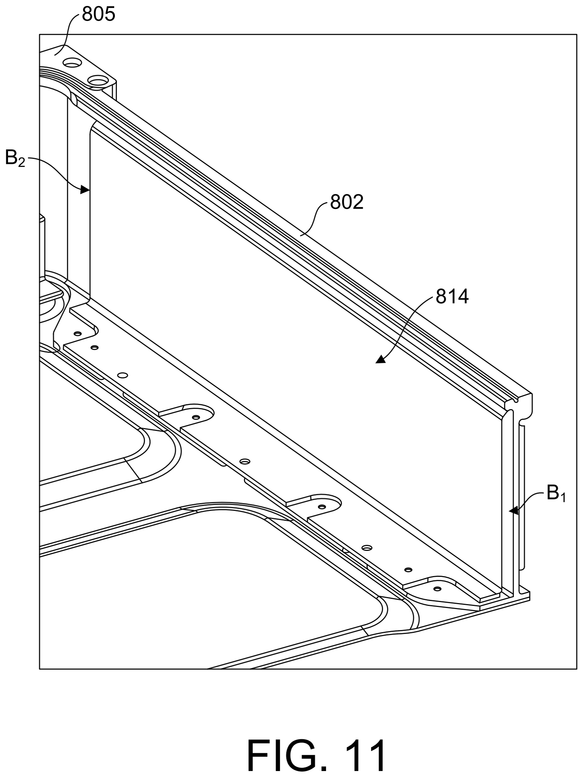

The major component 800 of the present disclosure comprise an external housing 801, as shown best in FIGs. 11-14, that includes a frame 802. External housing 801 encloses modular subcomponents 810a, 810b, each mated in alignment to form a continuous electrochemical structure. Openings are positioned at opposing regions to enable fluid ingress and egress, allowing for a directed flow in a primary inlet direction and a corresponding outlet direction. The connectors protrude into adjoining modules to facilitate energy transfer and structural cohesion. Structural features along the casing support controlled airflow distribution and reinforce the ability of the system to withstand thermal expansion and contraction during normal operation or during abnormal thermal conditions.

Subcomponent 810 and its frame 802 may comprise a top region of the frame 804, four corners 805a-d, an electrically active side 806 and a vent side 808. Frame 802 may be reinforced along the edges and corners 805a-d by a baffle 814. In one embodiment, frame 802 includes a baffle 814 along a top region 804 of frame 802 on the electronically active side 806. Baffle 814 may be a permanent fixture to frame 802 and provide protection should a thermal event occur along the edge of frame 802. Baffle 814 does not have a direct line of sight to vents 816a, 816b.

The electrically active side 806 may comprise the electrical component inlets 850 where all electrical wiring 852 for major component 800 runs through, and a cooling fluid inlet 840 for the thermal management system 841. Cooling fluid may flow from cooling fluid inlet 840 out of vents 816 through cooling pathways/fluid flow 842. The cooling fluid may cool each subcomponent 810, especially during a thermal event. The direction of the cooling fluid is shown as flowing from upstream inlet 840 through zoned pathways between the first and second major subcomponents 810a, 810b, ultimately exiting through vents 816a, 816b. A portion of the cooling fluid to enter at an angle relative to the primary flow direction, allowing localized cooling and controlled turbulence.

Venting side 808 may comprise at least one vent or outlet 816. In one embodiment, major component 800 comprises a first vent 816a and a second vent 816b. Cooling fluid and air may vent through first and second vent 816a, 816b to cool the subcomponents 810 in a way described further below. Vent 816 may be formed from plastic material.

As stated above, major component 800 may include a number of subcomponents 810. The number of subcomponents 810 may be covered in a mesh, or "thermal isolation material" 818, that promotes air flow during thermal management across the subcomponents 810 towards venting side 808. Thermal isolation material 818 is positioned within the thermal interface and is configured to support both compressibility and flow permeability. Layered boundaries are contoured to guide thermal and fluidic exchange in targeted regions. This local configuration enhances the thermal performance of the device by promoting effective separation and fluid dispersion, particularly during rapid heating scenarios.

Thermal isolation material 818 may comprise venting manifolds 832 along the length of the mesh. Venting manifolds 832 allow for gas to travel up from each subcomponent 810 across the top of mesh 832 towards venting side 808. Manifolds 832 are configured to capture gas and debris and route it through an internal volume formed between the first and second major subcomponents 810a, 810b. The gas flows along a rearward path and exits through multiple outlet locations spaced across the width of manifolds 832. A mesh or similar retention feature is located within each manifold 832 to trap particulate matter while allowing venting gases to escape. The structure of the interface supports the defined pressure release functionality while minimizing external impact and maintaining the structural integrity of the energy storage system.

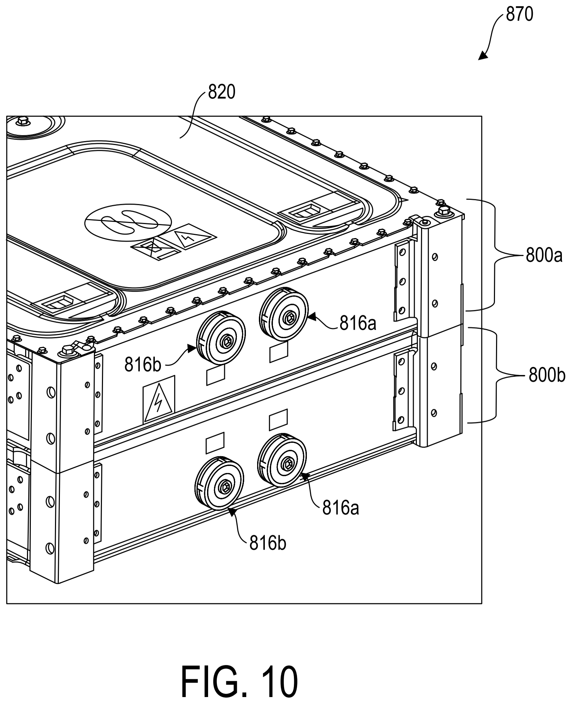

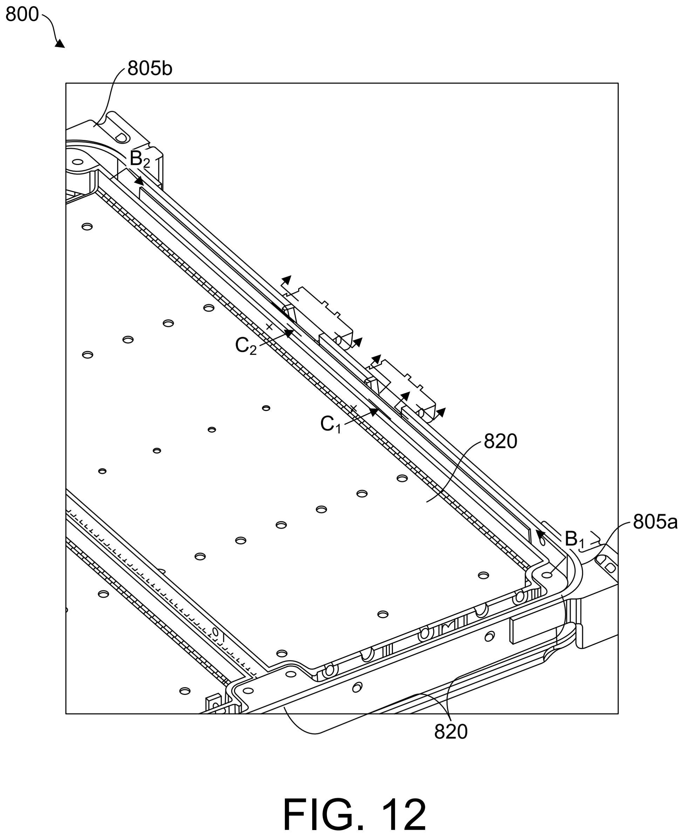

On top of thermal isolation material 818, a top plate 820 (shown in FIGs. 10 and 12) may be placed that holds all the subcomponents 810 securely within major component 800.

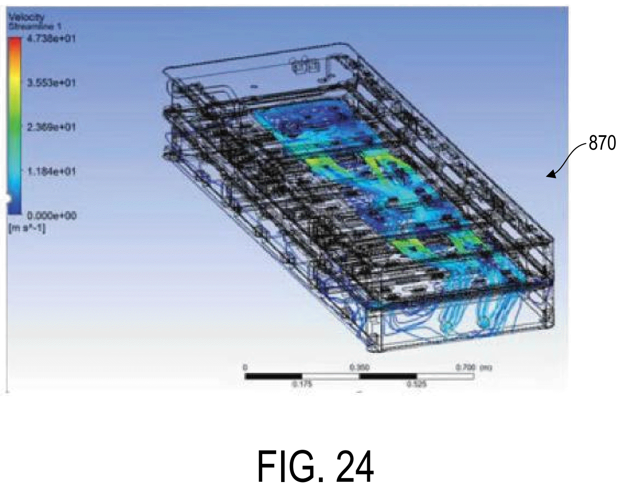

Air or other gas may flow from the electrically active side 804 to the vent side 808 of major component 800. The gas may flow along gas flow paths 830 shown in FIGs. 8, 9, 15, 21, and 22. These gas flow paths 830 may be along the top of thermal isolation material 818, between subcomponents 810, around the corners of frame 802, and out of venting manifolds 832, all towards vent side 808 such that the air flows out of vents 816a, 816b. The multiple paths 830 for gas flow allows air to cool all portions of subcomponents 810 and spread cool air to downstream subcomponents 810 through multiple pathways. This is particularly helpful in the event of a thermal event, as discussed further below. If one gas flow pathway 830 flows past a portion of a subcomponent 810 experiencing a thermal event, the gas in that branch of the gas flow pathway 830 may heat up quickly, not allowing that gas to cool downstream subcomponents 810. But, since each subcomponent 810 is cooled by multiple gas pathways 830, downstream subcomponents 810 can be cooled by branches of gas flow path 830 other than the one flowing directly past the thermal event. Portions of the gas pathways 830 are shown entering at varied angles to enhance cooling efficiency and flow distribution. The configuration enables primary airflow to move in a unidirectional pattern, supporting uniform thermal management and maintaining temperature gradients across modular units. The arrangement supports both normal operation and thermal mitigation during high-load or failure conditions. Referring now to FIG. 24, the configuration of airflow can lead to a control of the velocity of the airflow to remain relatively even across the subcomponents. The velocity of air as it leaves vents 816a, 816b is relatively the same as it is flowing through major component 800. Hot gas tends to speed up and want to flow faster out of a vent. If the gas is flowing quickly out of vents 816a, 816b, subcomponents 810 near vents 816a, 816b, get less time exposure to air for cooling than upstream subcomponents. However, keeping an even velocity across major component 800 allows for even cooling of each subcomponent 810 regardless of the position of the subcomponent upstream or downstream (closer to the vents).

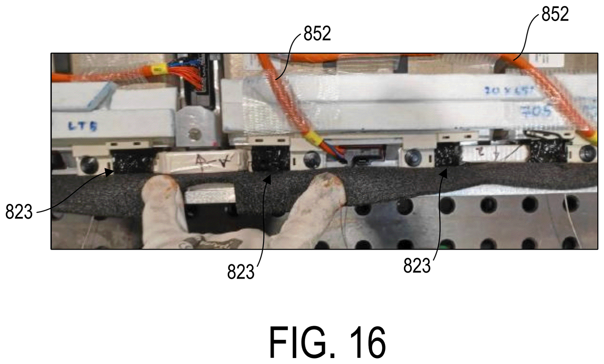

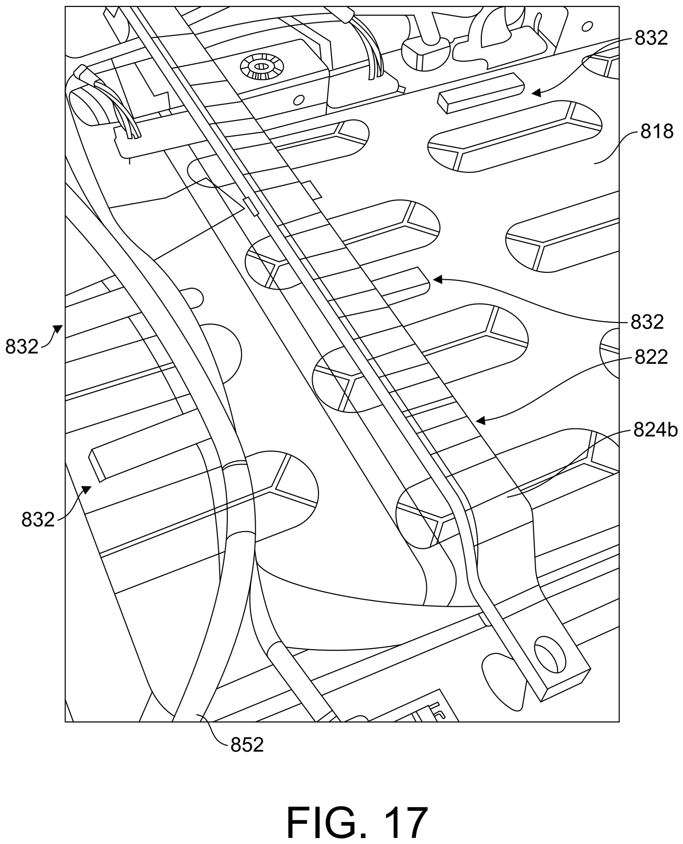

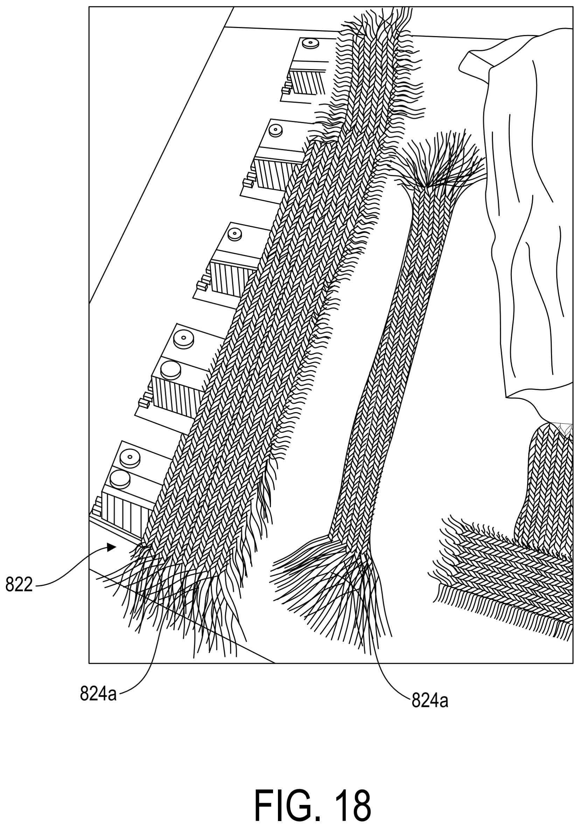

Major component 800 may comprise electrical wiring 852 that delivers electrical energy to each of the subcomponents 810. Electrical wiring 852 may start at inlet 850 on electrically active side 806 of major component 800. A series of busbars 822 may be used to conduct and distribute high-capacity electricity within major component 800. Busbar 822 may be an electrically conductive material, such as copper or aluminum, and plug into each subcomponent 810 at busbar potting points/inlets 823, as shown in FIG. 16. Referring now to FIGs. 17 and 18, busbar 822 may be wrapped in a busbar wrapping 824. Busbar wrapping 824 may be one of a mica wrapping 824b or a silica sleeve wrapping 824a. The busbar wrapping 824 prevents additional exposure of the busbar during a thermal event. This configuration supports the design objective of isolating thermal propagation across modular sections of the energy storage device. Mica tape 824b has greater thermal protection than silica sleeve wrapping 824a, but is thicker. Silica sleeve wrapping 824a may be better designed for tight spaces within major component 800.

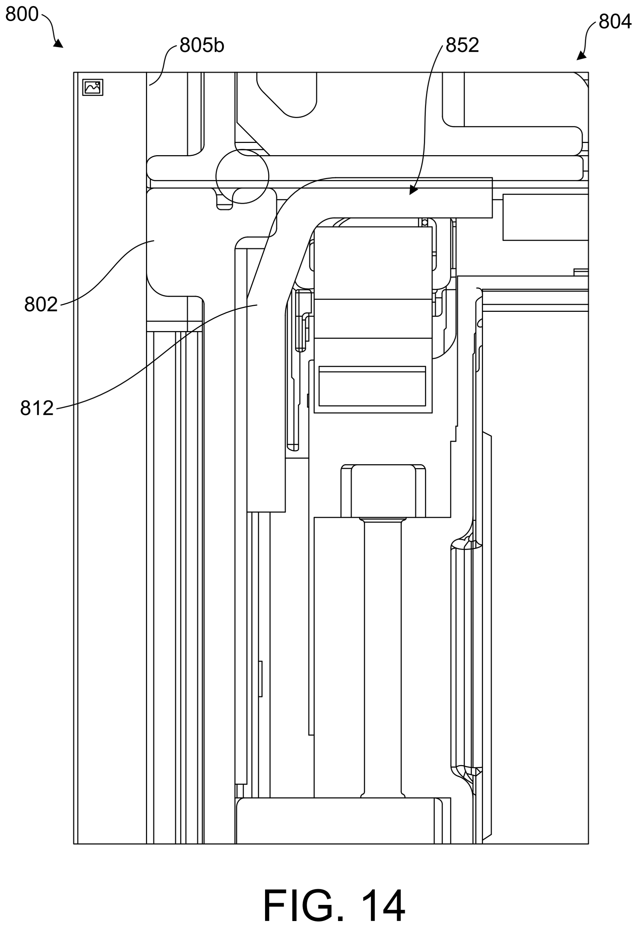

As shown in FIG. 14, electrical wiring 852 may be covered by a matting 812 to protect top region of the frame 804. Matting 812 may be a flexible non-woven matting designed to take up space between busbars 822 and top region of frame 804. Matting 812 may compress easily, trap particles, and slow down airflow through the top portion of the frame 804 to avoid overpressure events, but still help air flow.

An energy storage device may comprise any number of major components 800. In one embodiment of the present disclosure, the energy storage device comprises a first major component 800a and a second major component 800b stacked on top of each other to form a stack 870 (shown in FIGs. 10, 20A-24). Each major component, or "layer" 800a, 800b, is configured the same as described above and oriented in the same way such that the vent sides 808 and the electrically active sides 806 of each major component 800a, 800b are stacked one on top of the other. First major component 800a may be thermally isolable from second major component 800b such that a thermal event within one of the major components does not spread to the other major component.

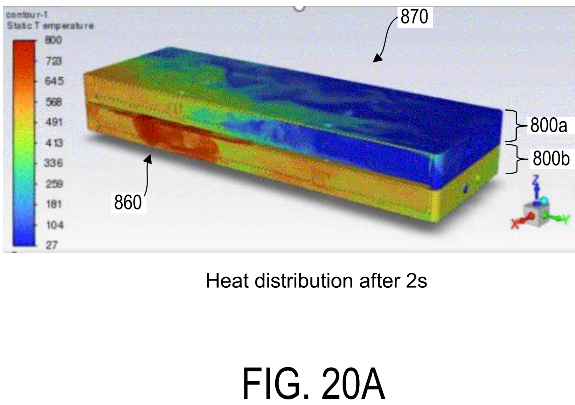

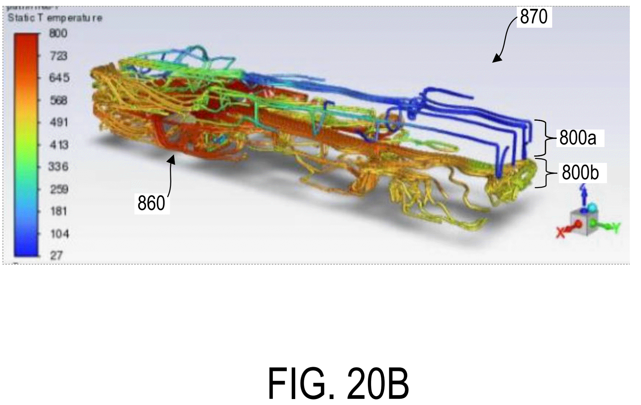

During a thermal event, such as an explosion or other fault in a battery pack within a subcomponent 810, the temperature and pressure within major component 800 may rapidly raise. Major component 800 is configured to thermally isolate a thermal event from the rest of the energy storage device. For example, referencing FIGs. 20A, 20B, 23, and 24, a thermal event 860 may occur around second subcomponent 810b in second major component 810b. Air 830 and cooling fluid flow 842 may continue to cool other subcomponents 810 within second major component 810b through the variety of branched pathways of each cooling method, as shown in the streamlines of FIG. 20B. This allows for subcomponent thermal isolation. Further, since first major component 810a is thermally isolable from second major component 810b, the temperature of second major component 810a will not be as affected by thermal event 860, as shown in FIG. 20A. The heat distribution of thermal event 860 is isolated to a small portion of second major component 810b. As the thermal event 860 spreads and heats up second major component 810b over time, the temperature inside first major component 810a still remains at a lower temperature due to the thermal isolation.

Devices, systems, methods, and kits according to the present disclosure may incorporate a range of structural and thermal propagation mitigation measures designed to enhance safety, serviceability, and operational efficiency of electrochemical energy storage assemblies. These measures include, but are not limited to, busbar thermal protection, terminal potting, internal baffles, specialized material selection, and directional flow control strategies. Collectively, these features support the containment, redirection, and suppression of thermal energy and gas release during both routine operation and thermal fault conditions.

In exemplary embodiments, a modular energy storage device comprises two or more major subcomponents arranged in a vertically or horizontally stacked configuration, joined along a thermally isolable interface. This interface is specifically engineered to restrict or delay heat transfer between subcomponents for a predefined minimum isolation duration. Integrated into this interface may be a combination of rigid insulating layers and thermally stable, compressible mesh materials that serve to accommodate stack flexure, enhance fluid dispersion, and maintain electrical isolation under thermal duress.

To protect electrical conduction pathways during abnormal thermal events, the system may include thermal shielding features such as busbar wrapping using high-temperature insulating materials and terminal potting, wherein the exposed terminals are embedded in a thermally resistive potting compound. These features serve to reduce the likelihood of conductive bridging, arcing, or propagation between adjacent conductive paths during high-temperature excursions. The potting material not only insulates but also provides mechanical support, minimizing displacement of components due to thermal expansion.

Within each subcomponent or module, internal baffles are strategically placed to create zoned cooling regions and to control the movement of cooling fluid across and between layers. These baffles may be configured to direct coolant flow in a primary outlet direction while allowing localized ingress at controlled angles, thereby promoting turbulence and heat extraction in critical areas. This fluid routing design also serves to direct any thermally activated gas flow away from sensitive interfaces and toward predefined containment volumes.

Material selection across the device is informed by both mechanical and thermal considerations. Structural components, such as the external housing and module frames, are constructed from high-temperature-capable polymers or thermally stable composites that maintain integrity under elevated stress conditions. The thermal interface may include layered materials engineered for differential compressibility, enabling tailored response during thermal expansion while ensuring consistent thermal isolation performance.

As an additional mitigation feature, the system includes a venting manifold configured to manage gas and debris release during thermal events. The manifold contains a weakened region in the module casing, precisely aligned with a relief aperture in the manifold housing. Upon exposure to overpressure, this region yields in a controlled manner, enabling gases and particulates to enter the manifold volume without uncontrolled rupture. From there, the flow is directed rearward along an internal path, exiting through multiple pressure relief ports distributed across the manifold's width. This approach ensures effective pressure management while minimizing the risk of structural damage or external propagation.

A mesh retention feature is included within the manifold's interior to trap solid debris while allowing gases to flow freely. This element also contributes to directional flow control, reducing turbulence and preventing re-entry of material into upstream subcomponents. The combination of vent alignment, mesh capture, and distributed outlet geometry ensures that thermal events are managed in a controlled and predictable fashion.

The modular subcomponents may also incorporate integrated electrical and fluid connectors designed to maintain connectivity without compromising isolation. These connectors are embedded within thermally isolated zones and positioned to avoid direct exposure to hot gas flow paths. The system design supports efficient assembly and disassembly, enabling the use of such kits for initial installation, upgrade, or field replacement of individual modules.

Devices, systems, methods, and kits incorporating principles of the present disclosure implement multiple thermal propagation mitigation measures, each designed to limit the spread of heat, manage the movement of gas and debris, and protect critical electrical pathways during thermal fault conditions. The following structural and material features serve as examples of these mitigation strategies and may be implemented individually or in combination within energy storage assemblies.

Busbar Thermal Protection is achieved through a combination of busbar wrapping and terminal potting. The rear busbar is enclosed in a Fyrewrap (silica-based) sleeve, while all other busbars are wrapped in high-temperature Mica Tape. This provides enhanced thermal and electrical isolation between the busbars and surrounding metal structures. These wraps protect the conductors from exposure to contaminated air during thermal events, in which elevated temperatures and airborne metallic particles could increase clearance and insulation breakdown risk. After installation, the joints of the busbars are further protected through terminal potting with a thermally resistant compound compliant with AS 1701. This compound encapsulates the terminals and associated fasteners, acting as a barrier against thermally-induced electrical arcing caused by polluted air.

Internal Baffles are used to influence the flow of hot gases generated during thermal events. A permanent sheet of stainless steel (grade 304) is installed within the assembly and serves as a physical barrier, forcing hot air to flow around the sides of the rear-most battery module. This structural feature eliminates direct line-of-sight between the rear module and critical plastic vents, thereby reducing the likelihood of direct thermal exposure and flame impingement. The redirected path reduces the risk of uncontrolled thermal propagation and enables a managed exhaust path.

Frame Protection is implemented through a dual-material strategy. The structural frames of the energy storage pack are lined with a protective layer of insulation that resists thermal degradation, supports electrical isolation, and prevents abrasion from high-velocity gas jets. A specialized material, such as Alke-gen BX, is applied to the primary gas flow pathway. In the upper frame region, a compressible, non-woven insulation mat (e.g., Alke-gen LM425) is installed to fill the gap between the busbars and the top of the frame. This layer slows airflow through the zone and captures debris, preventing overpressure while guiding gas safely through designated exhaust channels.

Flow Control measures are employed to manipulate the direction and pressure of gas flow in the event of cell venting or combustion. Temperature-activated material is applied to specific regions within the battery pack; upon reaching approximately 120°C, the material expands to as much as twice its original thickness. This expansion blocks critical air gaps and reroutes gas to the rear of the pack, particularly between designated module rows. This ensures that thermal events are steered away from sensitive areas. Alke-gen HX is one such material currently used for this function. Downstream of the pack, flow is ultimately directed through a set of four plastic vent components. These vents, chosen for cost and weight considerations, provide controlled pathways for pressure relief and emergency airflow during extreme overpressure conditions.

The thermal gas flow routing path is explicitly designed to guide gases through a multi-stage path: over the top of all modules toward a rear gap between modules, then down the sides of that gap, around the rear module endcaps, between the baffle and rear extrusion wall, and finally out through plastic vents to ambient air. This staged routing delays and dissipates energy release, maintaining structural integrity while enabling passive gas ejection.

Thermal Containment measures extend to structural panel design. Panels exposed to high-temperature gas, including top and intermediate panels, are constructed from stainless steel (grade 304) with melting points above 1200°C to withstand direct impingement. Aluminum alloys such as 6005A T6 may be used in frame construction for cost and formability, provided they are isolated from direct heat exposure. To ensure pressure-tight assembly, top panels are mechanically fastened with M5 screws, as adhesive bonding alone may not survive the peak internal pressures experienced during a fault.

To prevent galvanic corrosion between dissimilar metals (e.g., stainless steel panels and aluminum frames), and to enhance sealing, a Form-In-Place Gasket (FIPG) is applied at all contact interfaces. The FIPG material provides high-temperature resistance and serves as a panel seal, tier separator, and electrical isolator. Its application ensures that the stainless-aluminum interfaces remain electrically and chemically isolated throughout the operational life of the system.

Together, these thermal propagation mitigation strategies-covering busbar insulation, terminal sealing, internal baffling, pressure management, frame insulation, temperature-triggered flow barriers, and vented containment-provide a comprehensive, multi-layered defense against thermal runaway propagation in modular energy storage devices.

With reference to FIGs. 20A, 20B, 23, and 24, the thermal management and containment strategies described herein are further enhanced through the integration of a thermoelectrical barrier as a primary element of the thermal isolation interface between modular subcomponents of the energy storage device. This barrier is designed to perform dual roles-impeding the conduction of thermal energy and electrically insulating adjacent structural or conductive elements under normal and fault conditions. The thermoelectrical barrier may be constructed using high-temperature-resistant, electrically non-conductive materials arranged in layered or composite form to achieve the necessary isolation performance. These materials are strategically located at the interface between major subassemblies-such as battery cell stacks, cooling modules, and structural housings-to delay or prevent thermal propagation across component boundaries during a high-energy event, such as a thermal runaway.

The use of such barriers complements the operation of venting and flow-control subsystems, including the manifold structures previously described. While the manifold functions to direct high-temperature gases and particulate matter away from sensitive regions through defined containment and exhaust paths, the thermoelectrical barrier operates as a first line of defense against the cross-transfer of heat and electrical potential through the physical structure of the device. The inclusion of these barriers is particularly beneficial in modular systems where the thermal isolation duration must be sufficient to allow for venting and pressure relief to occur without escalation to adjacent modules. By combining passive thermal insulation with active venting control and particulate filtration, the system achieves a layered safety architecture that minimizes the risk of cascading thermal failure, electrical arcing, and uncontrolled ignition, even in densely packed or high-voltage configurations.

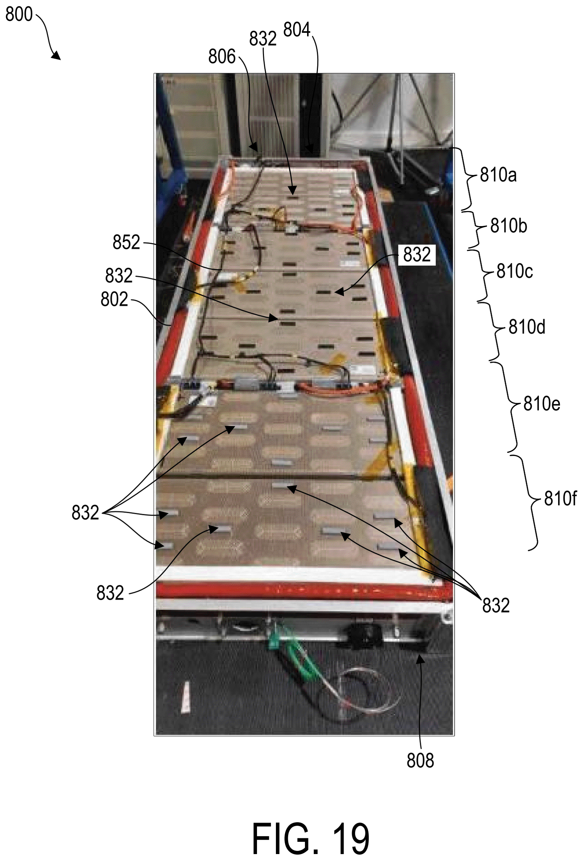

FIG. 19 is a cross-sectional representation of a venting subsystem incorporated within a manifold structure that forms part of the thermal management system of the energy storage device. The view captures the positional relationship between a weakened region of a battery module casing and an adjacent safe vent aperture defined in the manifold enclosure. The weakened region is designed with a pre-formed geometric profile, such as a scored or thinned section, which corresponds in size and shape to the adjacent manifold aperture to ensure localized and predictable material failure under increased internal pressure. When the internal pressure of the battery module exceeds a defined threshold-such as that occurring during a thermal runaway event-the weakened area yields, forming an entry port through which high-temperature gases and particulate debris are expelled.

The expelled contents are routed into an enclosed volume of the manifold, which is partially bounded by rigid surfaces of the major component and partially by thermally stable, gas-impermeable internal barriers. The internal geometry of the manifold includes directional flow guides, baffles, or surface relief features configured to promote laminar flow along a primary venting direction, typically oriented toward the rearward side of the energy storage pack. Within the manifold, a particulate mitigation element-such as a fine metallic or polymer mesh-is optionally interposed along the path of gas flow. This mesh is configured to trap and retain debris particles while allowing high-velocity gases to continue moving toward downstream exit ports. These ports are distributed laterally along the manifold, enabling the manifold to vent the internal pressure in a spatially uniform manner, which reduces the risk of localized over-pressurization and improves the mechanical safety profile of the device.

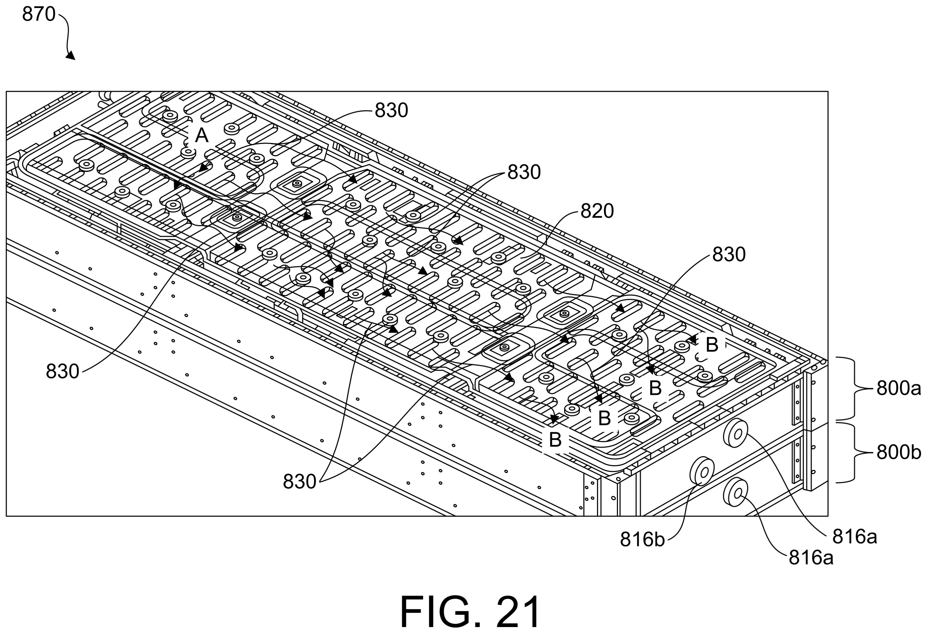

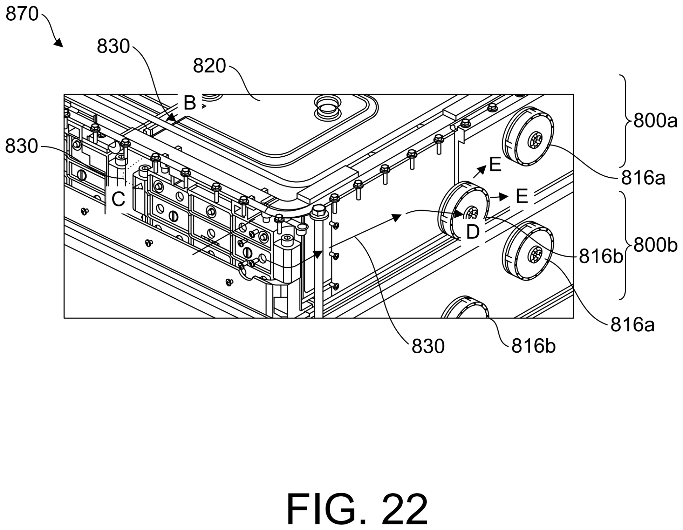

FIGs. 21 and 22 illustrate an embodiment of a gas and debris flow control system integrated into a battery module assembly. In the event of thermal propagation originating within a cell or module, initial venting occurs at a designated weakened area, referred to as point A. This weakened region corresponds precisely with the geometry of a SafeVent feature incorporated within the manifold, thereby creating a localized and intentional entry into the enclosed manifold volume. The alignment between the weakened module casing and the SafeVent ensures that the high-pressure gas and debris generated during the propagation event are immediately directed into the manifold, rather than dispersing freely within the pack. The manifold is configured to guide this flow rearward along the pack, confining the thermal event to a controlled pathway.

As gas and debris travel through the manifold, they are retained within the structure until they reach one or more predefined exit locations denoted as point B. These exits are distributed across the width of the manifold, enabling efficient evacuation of the contents and reducing pressure buildup. In addition to the controlled manifold pathway, the flow control system also encompasses mechanisms outside the scope of the manifold's integrated intellectual property. These include the secondary flow paths whereby gas may circumvent the module (point C), exit the battery pack through a specifically designed outlet vent (point D), and ultimately discharge into the ambient environment (point E). The outlet vent is typically constructed from a plastic material and is configured to rupture or open under specified pressure conditions, thereby facilitating safe venting to the atmosphere. This overall configuration ensures that both primary and secondary flow pathways are managed in a manner that prioritizes safety, containment, and predictable directional discharge of gases and particulate matter.

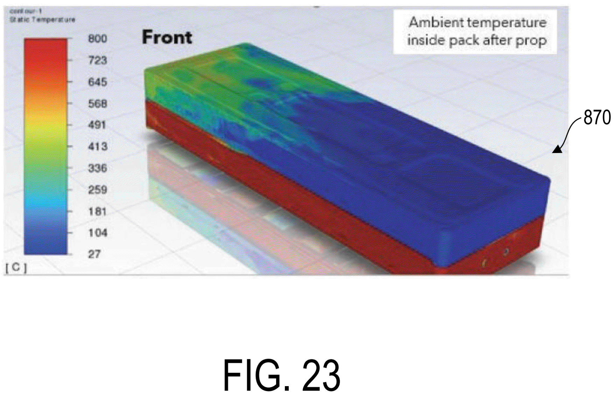

FIGs. 23 and 24 present results from computational fluid dynamics (CFD) analysis and thermal imaging studies conducted on a prototype battery pack incorporating the aforementioned manifold-based flow control system. The CFD simulation models a propagation event occurring in the second module from the front, located within the lower tier of the pack. The analysis indicates that, notwithstanding the presence of a large internal aperture at the front of the manifold, the hot gases resulting from the propagation event are effectively contained within the lower tier. This containment demonstrates the manifold's capability to restrict upward movement of hot gases and isolate the event to the zone of origin.

Thermal imaging of the prototype further corroborates the simulation findings. A significant temperature differential is observed between the top and bottom tiers of the pack, with elevated temperatures concentrated in the lower region. This differential confirms the efficacy of the manifold design in preventing vertical thermal migration. Additionally, streamline output from the CFD analysis indicates that the vast majority of gas movement originates at the front of the pack, in proximity to the initial propagation zone. The gas is channeled longitudinally within the manifold towards the designated pack exit, with minimal evidence of gas flow or air circulation in other regions of the pack. This confirms that the manifold effectively guides the propagation byproducts along a predefined route, thereby limiting the spatial extent of the thermal event and enhancing the safety of the overall battery system.

FIG s. 20A, 20B and 23 illustrates the thermal and fluid dynamic behavior observed during propagation events in a battery pack utilizing a manifold-based gas containment and redirection system. The figure comprises simulation outputs and analytical results, including Computational Fluid Dynamics (CFD) models and empirical data, which together characterize the performance of the manifold in guiding hot gas and debris during a thermal event.

The CFD simulation depicted in FIGs. 20A, 20B and 23models a propagation event originating from the second module from the front, located in the lower tier of the battery pack. Despite the manifold having a large open aperture at the front, the simulation reveals that the majority of hot gases are confined to the lower tier. This containment confirms that the manifold architecture effectively restricts vertical propagation and guides the resulting gas flow along a defined longitudinal path within the pack. Streamline outputs shown in the figure indicate that the directionality of the gas movement is maintained from the initiation zone at the front of the pack toward the designated exit at the rear, with minimal lateral or vertical dispersion. This performance demonstrates the manifold's capacity to channel thermal byproducts in a predictable and controlled manner.

Thermal analysis associated with the simulations in FIGs. 20A, 20B and 23 further supports this behavior. In one series of tests represented by the figure, the temperature rise at the front of the pack closely follows that observed in prior propagation studies, with similar ramp rates and peak values. However, in these particular tests, arcing was not observed-despite comparable thermal and gas flow conditions-due to the addition of insulating materials applied to busbars and supporting frame structures. These dielectric enhancements were effective in preventing electrical discharge, thereby validating that thermal stress alone is not sufficient to initiate arcing in the absence of conductive paths.

In contrast, other test sequences tied to FIGa. 20A, 20B and 23exhibit steady thermal increases up to the point of pack breach at approximately four minutes and twenty seconds. During these tests, recorded temperatures were below the threshold required to degrade components to the point of arcing. The data suggests that where arcing did occur, it was more plausibly initiated by environmental factors such as conductive debris or contamination, rather than by direct thermal breakdown. The figure includes results indicating that temperatures plateaued near 100°C prior to arcing in certain configurations. Since this temperature is consistent with other non-arcing scenarios, the conclusion drawn from FIGs. 20A, 20B and 23 is that particulate pollution-rather than temperature-is the dominant arcing trigger in such cases.

Moreover, FIGs. 20A, 20B and 23 incorporates comparative data from tests utilizing an mesh-type thermal isolation interface as a manifold structure. These tests demonstrate that the temperatures of vented gases were significantly below the autoignition points of several relevant flammable gases, including hydrogen (584°C), methane (540°C), propene (458°C), and acetylene (305°C). As such, FIGs. 20A, 20B and 23 supports the finding that standard thermal propagation events vented through the manifold do not reach autoignition conditions. However, one rear-initiated test exhibited thermal characteristics similar to front-initiated cases. This raises the possibility that a rear-initiated failure using a comparable manifold geometry could produce localized vent gas temperatures near critical ignition thresholds-especially under oxygen-rich or confined conditions.

The data and analyses presented in FIGs. 20A, 20B and 23 collectively validate the manifold's ability to constrain and direct the flow of hot gases, maintain structural and thermal isolation across battery tiers, and minimize the risk of arcing and autoignition under typical failure scenarios. The figure reinforces the importance of both physical insulation strategies and contamination control in preventing electrical discharge, while also cautioning against scenarios in which gas temperatures may approach flammable limits under specific initiation modes.

With reference generally to FIGS. 8-24 again, the thermally isolable interface and associated energy storage architectures described in the present disclosure are capable of providing extended thermal isolation durations, with demonstrated performance reaching approximately thirty minutes or more under controlled test conditions. These durations are measured from the initiation of a detrimental thermal event in one major subcomponent until the point at which thermally induced changes are detected in an adjacent subcomponent. This performance exceeds many conventional standards and provides enhanced design flexibility for safety-critical applications such as electric vehicles, stationary storage systems, aerospace platforms, and maritime applications.

The observed isolation performance is attributed to several integrated design principles embodied within the present disclosure. These include (i) the incorporation of thermal isolation materials with high heat capacity and low thermal conductivity positioned at the interface between adjacent subcomponents, (ii) the use of physical separation structures that limit conductive, convective, and radiative transfer across the boundary, (iii) the integration of compliant structures such as thermal gap-fillers, mesh inserts, or deformable insulative barriers, and (iv) the coordinated routing of cooling fluid flow across and around critical interface regions. These elements operate synergistically to delay or attenuate the propagation of heat across the interface and allow for pressure relief, system-level shutdown, or fire suppression actions to be completed before full thermal transmission occurs.

In various embodiments, a kit is provided that includes one or more of the components disclosed herein and is configured to enable customization of thermal isolation performance to meet specific application requirements or jurisdictional regulatory thresholds. The kit may include, without limitation, sets of thermal isolation materials offered in a range of thicknesses, material compositions, and surface treatments, allowing users to tailor the thermal conduction profile of the system. Modular thermal interface inserts-such as mesh layers or compressible baffles-may be selectively installed between subcomponents to achieve a targeted level of thermal resistance based on system design or performance goals.

Additionally, the kit may incorporate subcomponent housings that feature adjustable air gaps or structural decoupling mechanisms, which allow spatial tuning of the thermal isolation zones between adjacent modules or tiers. Interchangeable fluid routing components, including flow diverters, angled nozzles, and zoned manifolds, may also be included to optimize the distribution of coolant around high-risk thermal regions and ensure consistent thermal management under varying load conditions.

To manage pressure and gas dynamics during fault events, the kit may further comprise venting manifolds designed with variable cross-sectional profiles and configurable outlet arrangements, thereby enabling control over gas retention time, directional exhaust flow, and internal pressurization behavior. Finally, the kit may include sensor modules and integrated feedback systems that actively monitor the thermal isolation interface. These sensors can trigger automated or user-defined responses based on specific time or temperature thresholds, enhancing the dynamic safety and reliability of the overall energy storage system.

The modularity of the kit enables assembly of energy storage systems capable of conforming to diverse regional safety standards. For example, jurisdictions such as the European Union may require minimum isolation durations aligned with UNECE R100 or ECE R136 regulations, while other regions may impose more stringent guidelines for transit, industrial, or high-voltage stationary systems. In each case, the kit allows selection of appropriately rated subcomponents to meet or exceed minimum required isolation durations, including design configurations that support thresholds of 5, 10, 15, 30 minutes or more.

Further, because thermal risk profiles vary by application (e.g., high-power discharge vs. long-duration standby), the flexibility afforded by the kit permits balancing between thermal isolation performance, system mass, cooling system complexity, and manufacturing cost. Instructions or configuration guides may accompany the kit, specifying validated assemblies for achieving target isolation durations under standard load and thermal conditions.

Accordingly, the present disclosure not only provides component-level thermal management solutions, but also supports system-level adaptability and regulatory alignment through a modular and configurable approach, enabling widespread application of the technology across multiple industries and international markets.

The present disclosure further contemplates fluid management strategies within the major component of an energy storage system, with particular emphasis on configurable flow pathways and controllable distribution mechanisms. In various embodiments, the system is configured to facilitate directional fluid flow-such as coolant or conditioned air-from an upstream region at a first side of the major component to a downstream region at a second, opposite side. The architecture may optionally include one or more flow diversion pathways that redirect the fluid laterally, vertically, or diagonally across the structure, depending on the thermal demands of the application or the spatial arrangement of internal subcomponents. The fluid delivery system may comprise single or multiple inlets and outlets, each of which may be operated independently or in a coordinated sequence to achieve optimized cooling or pressure equalization across the energy storage pack. The modular nature of the system allows for any combination of inlet/outlet activation and flow path configuration, supporting both passive and active thermal regulation strategies across a wide range of operational scenarios.

In various embodiments of the present disclosure, a cooling fluid-such as air, inert gas, or dielectric liquid-is introduced into an energy storage system to provide thermal regulation of a major component comprising a plurality of subcomponents, including at least a first major subcomponent and a second major subcomponent disposed on opposite sides of a thermally isolable interface. The thermal management architecture is arranged to enable fluid flow from an upstream location positioned at a first side of the energy storage system to a downstream outlet location positioned at a second side, where the first side and second side are defined as spatially opposing lateral faces of the system enclosure or pack structure.

From the perspective of the cooling fluid, entry into the energy storage system occurs at the upstream region of the first side through one or more inlet ports, apertures, or ducts. In one configuration, the fluid is introduced via a single inlet-such as a central manifold, header, or bulkhead-mounted port-which supplies fluid uniformly across the internal structure. In alternative configurations, a plurality of inlets may be distributed along the upstream side, each inlet corresponding to a specific cooling zone, component tier, or submodule. These plural inlets may be configured with independent control, such as electronically actuated valves, variable-speed fans, or pressure regulators, to modulate flow delivery based on sensed thermal loads, zone priority, or control algorithms.

Upon entering the system, the cooling fluid proceeds through engineered internal channels, which may include interstitial flow paths, mesh-defined plenums, or form-defined baffles positioned between the first and second major subcomponents. The flow is guided to travel not only through the major component as a whole but also between internal electrochemical elements-such as battery cell tiers, connector plates, and vented manifolds. The flow direction is maintained in a primary outlet direction, extending from the upstream inlet region toward the downstream outlet location at the second side of the system.

Throughout its path, the fluid interfaces with thermal exchange surfaces across multiple planes of the system. These include both internal component interfaces and the thermally isolable interface itself, across which the fluid assists in maintaining separation between subcomponents during thermal events. In systems that utilize a mesh interface layer between major subcomponents, the fluid is permitted to pass across the interface while preserving thermal isolation due to the engineered porosity and thermal resistance properties of the mesh.

At the downstream region, the fluid is collected into one or more outlet ducts or apertures positioned along the second side of the energy storage system. In one configuration, the system employs a single outlet, which may serve as a plenum or exhaust port for the collected cooling fluid. In other embodiments, a plurality of outlet locations may be implemented across the downstream face, each corresponding to a particular flow zone or subcomponent region. Like the inlets, these outlets may be configured for independent flow control, allowing selective pressure regulation, flow direction modulation, or zone-specific venting during different operational modes.

The system may also include optional lateral or vertical diversion pathways, which redirect a portion of the fluid flow to other sides of the energy storage system. For example, under certain environmental or packaging constraints, a subset of fluid flow may be diverted to top-mounted or side-mounted exit locations, depending on the thermal gradient, orientation, or adjacent module configurations. This flow diversion may occur through passive means (e.g., branching ducts or pressure gradients) or actively controlled diverters (e.g., motorized valves or pneumatic actuators).

The inlet and outlet architecture of the system may be arranged in any suitable configuration to meet specific design or thermal management objectives. In one embodiment, a single inlet and a single outlet may be employed to achieve a streamlined packaging layout with straightforward flow routing. Alternatively, the system may incorporate multiple inlets feeding a single outlet, thereby enabling distributed fluid delivery across various zones while centralizing the exhaust path. In another configuration, a single inlet may be used in conjunction with multiple outlets to distribute discharge fluid selectively based on localized thermal requirements. In more advanced embodiments, both multiple inlets and multiple outlets may be provided, each of which may be independently controlled to support fully zoned and dynamically responsive cooling or fluid regulation throughout the energy storage system.

This flexible fluid architecture supports both steady-state thermal regulation during normal operation and dynamic isolation and venting in response to thermal events. By structuring the fluid pathways with configurable geometry, dynamic control, and directional bias from first side to second side, the disclosed system enables highly adaptable thermal management strategies suitable for diverse applications, including but not limited to electric vehicles, stationary grid energy storage, aerospace platforms, and modular battery enclosures.

Optionally, thermal isolation materials can be employed throughout the battery pack,such as arranged about battery cells and between tiers of stack battery cells. A thermal isolation material described herein is designed to provide effective thermal management and isolation in battery systems, particularly for electric vehicle (EV) applications. This advanced material facilitates the creation of a thermal isolation interface and can function effectively as a protective mesh within battery assemblies. The material's properties are optimized to withstand extreme temperatures, making it suitable for managing and mitigating thermal events, thus significantly enhancing battery safety and performance.

The material demonstrates exceptional thermal resistance, capable of withstanding temperatures well above typical operational conditions encountered in battery applications. Additionally, its superior insulation performance ensures that the opposite side of the material remains within safe operating temperatures during thermal exposure events. These characteristics collectively enable the material to prevent or significantly delay thermal propagation, protecting battery cells from potential damage or failure due to thermal runaway conditions.

A notable feature of this thermal isolation material is its resistance to hot gas particle impact, providing sustained protection against transient thermal phenomena. Thermal conductivity is deliberately minimized to ensure efficient insulation performance, maintaining low conductivity across typical operational temperature ranges. Such low conductivity is essential for preserving battery performance and safety by minimizing heat transfer to adjacent battery cells or components.

Electrical insulation is another attribute, ensuring that the material provides effective dielectric isolation within battery systems. The dielectric strength of the material is sufficiently high to prevent unintended electrical conduction, significantly reducing the risk of electrical shorts. This property is crucial, particularly in battery environments where electrical isolation between components is necessary to maintain safety and operational integrity.

Physically, the thermal isolation material is characterized by moderate density, making it well-suited for integration into weight-sensitive applications. The material is available in customizable thicknesses, allowing flexibility in design and application across various battery configurations. Its adaptability supports ease of installation and effective integration into existing battery pack architectures and designs.

The thermal isolation material described herein can be effectively structured as a porous mesh, designed specifically to control fluid or gas flow in thermal management applications. This porous mesh configuration allows for single-directional or multi-directional flow characteristics, depending on the intended application and thermal management objectives. Single-directional flow control is particularly useful in applications where directional thermal management and isolation are necessary, ensuring that thermal transfer is efficiently directed away from critical battery components.

When engineered for multi-directional flow, the porous mesh structure provides uniform distribution and dissipation of heat across broader areas. Such a configuration is highly beneficial in managing thermal gradients within complex battery assemblies, where uniform temperature maintenance across multiple battery cells or modules is essential. The mesh porosity and structural arrangement facilitate effective heat transfer and distribution, significantly reducing the risk of localized overheating or thermal propagation.

The mesh's porous nature also allows for tailored permeability levels, providing precise control over the fluid or gaseous medium flow rates through the material. This controlled permeability can be optimized during manufacturing by adjusting pore size, distribution density, and material thickness, enabling engineers to precisely manage heat dissipation characteristics tailored to specific battery management requirements. Enhanced control over permeability and flow directionality further contributes to improved overall thermal management system performance.

Additionally, the porous mesh structure inherently enhances the material's mechanical flexibility and adaptability, facilitating integration into battery packs or other thermal management systems that require conformability around complex geometries. The mesh can be designed and fabricated to suit various spatial constraints, ensuring seamless integration into existing battery designs without compromising thermal management effectiveness. As a result, this adaptability makes the porous mesh thermal isolation material an ideal choice for advanced thermal management applications where customized performance and integration flexibility are critical.

Mechanically, the material exhibits robust tensile strength, ensuring durability and resistance to mechanical stresses commonly encountered in automotive or stationary battery installations. Additionally, the material possesses excellent compressive strength, allowing it to withstand substantial mechanical loads without compromising its integrity. This mechanical robustness ensures consistent performance and reliability even under challenging operational or impact conditions.

Fire safety is a primary consideration, with the thermal isolation material meeting high flame-retardancy standards. Its flame-resistant properties contribute significantly to the overall safety profile of battery systems, enhancing protection against fire hazards. This characteristic is particularly important in environments where maintaining stringent safety standards is essential, such as automotive or high-capacity energy storage installations.

Incorporation of this thermal isolation material into battery systems effectively mitigates the risk of thermal propagation and supports continued operation under adverse thermal conditions. This capability ensures vehicle reliability and facilitates critical vehicle functions, including maintaining a limp-home driving mode if necessary. As a result, occupants are afforded additional safety measures, and vehicle performance remains predictable even under thermal stress scenarios.

The examples discussed in the subsequent sections should therefore be viewed as illustrative implementations, rather than limiting definitions of the disclosed technology. Any modifications, enhancements, or refinements made to suit specific applications would be understood by those skilled in the art to be logical extensions of the principles presented herein.

The principles of the present disclosure can be applied across various vehicle configurations, optimizing power distribution, efficiency, and adaptability in multi-mode hybrid vehicle systems. The following Examples illustrate practical implementations of these principles in different drivetrain architectures:

In Example 1, an energy storage device comprising a major component that includes first and second major subcomponents configured to interconnect at a thermally isolable interface arranged therebetween, the first and second major subcomponents being constituent components of an electrochemical system that is configured to store energy for the energy storage device and cooled via fluid flow in a primary outlet direction across the thermally isolable interface, the first and second major subcomponents being arranged such that the first major subcomponent is thermally isolable from the second major subcomponent for a minimum isolation duration when the energy storage device experiences a detrimental thermal event.

In Example 2, the energy storage device as Example 1 describes, wherein the major component is a battery cell stack.

In Example 3, an energy storage system comprising a plurality of energy storage devices according to any as either of Examples 1 or 2 describe-18, arranged in a modular array and interconnected via structural, electrical, and fluidic interfaces, wherein each device is individually thermally isolable from adjacent devices for a predefined minimum duration.

In Example 4, the energy storage system as any of Examples 1-3 describe, wherein each energy storage device includes a venting manifold and each manifold is interconnected with a shared gas containment pathway.

In Example 5, the energy storage system as any of Examples 1-4 describe, wherein system-level thermal management is coordinated across the devices via a centralized controller configured to trigger device-level isolation and venting in response to detected conditions.

In Example 6, the energy storage device as any of Examples 1-5 describe, wherein the electrochemical system includes modularly connectible tiers of battery cells.

In Example 7, the energy storage device as any of Examples 1-6 describe, wherein the stack includes one or more structural alignment features configured to facilitate precise interconnection of the subcomponents.

In Example 8, the energy storage device as any of Examples 1-7 describe, further comprising a thermal management system that is configured to cool the first and second major subcomponents via introduction of a cooling fluid in a primary flow inlet direction.

In Example 9, the energy storage device as any of Examples 1-8 describe, wherein the major component is configured to facilitate introduction of a cooling fluid flow at an upstream position of the major component via a plurality of different inlet locations, and wherein a majority of the cooling fluid flow is directed to flow downstream of the upstream position in the primary flow outlet direction toward an outlet location of the major component.

In Example 10, the energy storage device as any of Examples 1-9 describe, wherein a portion of the cooling fluid flow is introduced at an angle relative to the primary flow outlet direction.

In Example 11, the energy storage device as any of Examples 1-10 describe, wherein the cooling fluid flow is zoned to flow between the first and second major subcomponents.

In Example 12, the energy storage device as any of Examples 1-11 describe, wherein one or more connectors are included between the subcomponents, each connector configured to protrude partially into an adjacent subcomponent while maintaining the thermal isolation interface.

In Example 13, the energy storage device as any of Examples 1-12 describe, wherein a portion of at least one connector protrudes into a receiving recess within the adjacent subcomponent.

In Example 14, the energy storage device as any of Examples 1-13 describe, further comprising one or more additional major subcomponents in the stack, each interposed in sequence with corresponding thermally isolable interfaces.

In Example 15, the energy storage device as any of Examples 1-14 describe, wherein the minimum thermal isolation duration is at least five minutes.

In Example 16, the energy storage device as any of Examples 1-15 describe, wherein a portion of the thermal isolation interface is defined by a thermal isolation material that is positioned between the first and second major subcomponents.

In Example 17, the energy storage device as any of Examples 1-16 describe, further comprising a venting manifold wherein a weakened area in a module casing corresponds with a shaped opening in the manifold, creating a local entry to an enclosed volume within the manifold.

In Example 18, the energy storage device as any of Examples 1-17 describe, wherein gas and debris released from the module are directed rearward within the manifold and retained within an enclosed region.

In Example 19, the energy storage device as any of Examples 1-18 describe, wherein the gas and debris exit the manifold at a plurality of outlet ports distributed across the width of the manifold.

In Example 20, the energy storage device as any of Examples 1-19 describe, further comprising a mesh material positioned between the first and second major subcomponents, the mesh facilitating the inlet flow of the cooling fluid.

In Example 21, the energy storage device of claim 18, wherein the mesh is further configured to provide compressibility of the stack along an axis angled relative to the mesh plane.

In Example 22, a modular electrochemical subcomponent configured for integration into an energy storage device, the subcomponent comprising at least one tier of battery cells and at least one interface surface shaped and arranged to mate with a corresponding surface of a second subcomponent, the interface configured to support thermal isolation for a minimum duration during a thermal event occurring within the second subcomponent.

In Example 23, the modular subcomponent as Example 22 describes, wherein the interface surface comprises a material having a thermal conductivity less than 0_prd_1 W/mK.

In Example 24, the modular subcomponent as either of Examples 22 or 23 describe, wherein the subcomponent includes at least one embedded connector configured to engage with the second subcomponent without compromising the thermal isolability of the interface.

In Example 25, the modular subcomponent as any of Examples 22-24 describe, wherein the subcomponent further comprises guide features to align a mesh or spacer element for cooling fluid distribution across the interface.

In Example 26, a kit comprising one or more components selected from: (i) a first major subcomponent of an energy storage device, (ii) a second major subcomponent, (iii) a thermal isolation interface element, (iv) a venting manifold, (v) a mesh insert configured to facilitate cooling fluid flow, and (vi) one or more inlet or outlet ducting features, wherein the components are configured to be assembled to form an energy storage device that provides thermal isolation between the subcomponents for a minimum duration.

In Example 27, the kit as Example 26 describes, wherein the thermal isolation interface element includes a customizable thickness or material composition selected to achieve a target isolation duration of at least thirty minutes.

In Example 28, the kit as either of Examples 26 or 27 describe, further comprising a set of interchangeable fluid routing components configured to modify inlet flow angles and flow zoning patterns.

In Example 29, the kit as any of Examples 26-28 describe, wherein instructions are provided to enable configuration of the kit for compliance with thermal isolation regulations applicable in different jurisdictions.

In Example 30, a method for thermally regulating an energy storage system comprising: providing an energy storage device including a major component having first and second major subcomponents interconnected at a thermally isolable interface; introducing a cooling fluid into the energy storage device at an upstream location; directing the cooling fluid to flow throughout and between the first and second major subcomponents in a primary outlet direction across the thermally isolable interface; and controlling thermal propagation across the energy storage device during a thermal event by maintaining thermal isolation between the first and second major subcomponents for at least a minimum isolation duration.

In Example 31, the method as Example 30 describes, wherein directing the cooling fluid comprises zoned delivery of the fluid to preferentially cool high-temperature regions near the interface.

In Example 32, the method as either of Examples 30 or 31 describe, wherein introducing the cooling fluid includes delivering the fluid at multiple inlet locations distributed along the upstream side of the major component.

In Example 33, the method as any of Examples 30-32 describe, wherein at least a portion of the cooling fluid enters the energy storage device at an angle relative to the primary outlet direction.

In Example 34, the method as any of Examples 30-33 describe, further comprising routing the cooling fluid through a mesh or perforated interface structure positioned between the first and second major subcomponents.

In Example 35, the method as any of Examples 30-34 describe, further comprising regulating flow rate or direction of the cooling fluid based on temperature data collected from sensors positioned near the thermally isolable interface.

In Example 36, the method as any of Examples 30-35 describe, further comprising introducing the cooling fluid through inlet features integrated into a venting manifold associated with the major component.

In Example 37, the method as any of Examples 30-36 describe, wherein the thermal isolation duration is at least five minutes under a defined detrimental thermal condition originating in one of the major subcomponents.

In Example 38, the method as any of Examples 30-37 describe, wherein the step of maintaining thermal isolation includes limiting conductive, convective, and radiative thermal transfer using a thermal isolation material positioned at the interface.

In Example 39, the method as any of Examples 30-38 describe, wherein the energy storage device is part of a system that includes a plurality of energy storage devices each thermally regulated by cooling fluid in a coordinated manner.

As used herein, terms electrochemical cells, cells, and similar terms are meant to refer to individual battery cells such as coin cells, prismatic cells of various shape, jelly roll cells, pouch cells, or any other appropriate electrochemical device capable of acting as a battery. Additionally, a pouch cell, electrochemical pouch cell, and other similar terms are meant to refer to cells that include a deformable outer layer that typically includes layers of laminated polymers and metal foils surrounding an internal electrode stack or roll. Typically, pouch cells include larger flat opposing front and back surfaces and smaller side surfaces. Further, when forming stacks of pouch cells, the flat surfaces are typically stacked one on top of the other. However, certain examples may use multiple adjacent cell stacks where the cells are either in series and/or in parallel. In certain embodiments, other ways of arranging the cells may also be employed.

Non-limiting examples of various battery pack configurations and arrangements noted above include battery pack with a battery management unit and/or other associated electronics that provide various types of desired functionality. For instance, such battery packs include a plurality of battery modules electrically connected in series and/or parallel to achieve the target pack voltage. A battery management system monitors the voltage and current and manages overall operation of the battery pack. Each battery module comprises a plurality of battery cells electrically connected in series and/or parallel. Each battery module includes a battery management unit which monitors and manages charge and discharge of the cells in that module.

Although not illustrated or discussed exhaustively herein, one skilled in the art will appreciate that each battery management unit can include various sensors for facilitating serviceability and usability functions discussed elsewhere herein. For instance, voltage sensors can sense the voltages of individual cells or groups of cells. Each battery management unit may also include one or more temperature and/or pressure sensors which sense the temperature and/or pressure of the module and/or individual cells or groups of cells. The battery management system communicates with the battery management unit in each of the modules to monitor and manage overall operation of the battery pack. The battery management system and each of the battery management units include a processor with the appropriate software, along with memory and other components, which are used to monitor and manage charge and discharge. For example, in certain examples, a battery management unit may include circuitry that expands the number of cells for which the battery management unit may perform cell voltage sensing and balancing. In certain examples, the battery management unit may include overvoltage protection monitoring and interlock functionality. Additionally, a battery management unit may include circuitry and/or be programmed to implement a method of active and standby power supply adaption that provides lower active power dissipation. A battery management unit may also include external Flash Memory for more secure program bootloading. Of course, in certain examples battery management units may include combinations of the above noted functionalities and/or different functionalities.

It is well understood that methods that include one or more steps, the order listed is not a limitation of the claim unless there are explicit or implicit statements to the contrary in the specification or claim itself. It is also well settled that the illustrated methods are just some examples of many examples disclosed, and certain steps can be added or omitted without departing from the scope of this disclosure. Such steps can include incorporating devices, systems, or methods or components thereof as well as what is well understood, routine, and conventional in the art.

The connecting lines shown in the various figures contained herein are intended to represent exemplary functional relationships and/or physical couplings between the various elements. It should be noted that many alternative or additional functional relationships or physical connections can be present in a practical system. However, the benefits, advantages, solutions to problems, and any elements that can cause any benefit, advantage, or solution to occur or become more pronounced are not to be construed as critical, required, or essential features or elements. The scope is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone can be present in an embodiment, B alone can be present in an embodiment, C alone can be present in an embodiment, or that any combination of the elements A, B or C can be present in a single embodiment; for example, A and B, A and C, B and C, or A and B and C.

In the detailed description herein, references to "one embodiment," "an embodiment," "an example embodiment," etc., indicate that the embodiment described can include a particular feature, structure, or characteristic, but every embodiment can not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art with the benefit of the present disclosure to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f), unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but can include other elements not expressly listed or inherent to such process, method, article, or apparatus.

While various embodiments of the disclosure have been shown and described, it is understood that these embodiments are not limited thereto. The embodiments may be changed, modified and further applied by those skilled in the art. Therefore, these embodiments are not limited to the detail shown and described previously, but also include all such changes and modifications.

## Claims

1. An energy storage device comprising a major component that includes:
a first major subcomponent; and
a second major subcomponents, each of the first major subcomponent and the second major subcomponent configured to interconnect at a thermally isolable interface arranged therebetween,
wherein the first and second major subcomponents being constituent components of an electrochemical system that is configured to store energy for the energy storage device and cooled via fluid flow in a primary outlet direction across the thermally isolable interface; and
wherein the first major subcomponent and the second major subcomponent arranged such that the first major subcomponent is thermally isolable from the second major subcomponent for a minimum isolation duration when the energy storage device experiences a thermal event.

2. The energy storage device of claim 1, wherein the major component is a battery cell stack.

3. The energy storage device of claim 1or 2, further comprising a thermal management system that is configured to cool the first and second major subcomponents via introduction of a cooling fluid in a primary flow inlet direction.

4. The energy storage device of claim 3, wherein the major component is configured to facilitate introduction of a cooling fluid flow at an upstream position of the major component via a plurality of different inlet locations, and wherein a majority of the cooling fluid flow is directed to flow downstream of the upstream position in the primary flow outlet direction toward an outlet location of the major component.

5. The energy storage device of claim 3 or 4, wherein:
a portion of the cooling fluid flow is introduced at an angle relative to the primary flow outlet direction; and
the cooling fluid flow is zoned to flow between the first and second major subcomponents.

6. The energy storage device of any of the preceding claims, wherein one or more connectors are included between the subcomponents, each connector configured to protrude partially into an adjacent subcomponent while maintaining the thermal isolation interface; and
wherein a portion of at least one connector protrudes into a receiving recess within the adjacent subcomponent

7. The energy storage device of any of the preceding claims, further comprising one or more additional major subcomponents in the stack, each interposed in sequence with corresponding thermally isolable interfaces.

8. The energy storage device of any of the preceding claims, wherein the minimum thermal isolation duration is at least five minutes.

9. The energy storage device of any of the preceding claims, wherein a portion of the thermal isolation interface is defined by a thermal isolation material that is positioned between the first and second major subcomponents.

10. The energy storage device of claim 9, wherein the thermal isolation material further comprising a venting manifold wherein a weakened area in a module casing corresponds with a shaped opening in the manifold, creating a local entry to an enclosed volume within the manifold; and
wherein gas and debris released from the module are directed rearward within the manifold and retained within an enclosed region.

11. The energy storage device of claim 9 or 10, wherein the thermal isolation material is further configured to provide compressibility of the stack along an axis angled relative to the mesh plane.

12. A modular electrochemical subcomponent configured for integration into an energy storage device, the subcomponent comprising:
at least one tier of battery cells; and
at least one interface surface shaped and arranged to mate with a corresponding surface of a second subcomponent, the at least one interface surface configured to support thermal isolation for a minimum duration during a thermal event occurring within the second subcomponent.

13. The modular subcomponent of claim 12, wherein:
the interface surface comprises a material having a thermal conductivity less than 0.1 W/m·K; and/or
the subcomponent includes at least one embedded connector configured to engage with the second subcomponent without compromising the thermal isolability of the interface; and/or
the subcomponent further comprises guide features to align a mesh or spacer element for cooling fluid distribution across the interface.

14. A method for thermally regulating an energy storage system comprising:
providing an energy storage device including a major component having first and second major subcomponents interconnected at a thermally isolable interface;
introducing a cooling fluid into the energy storage device at an upstream location;
directing the cooling fluid to flow throughout and between the first and second major subcomponents in a primary outlet direction across the thermally isolable interface; and
controlling thermal propagation across the energy storage device during a thermal event by maintaining thermal isolation between the first and second major subcomponents for at least a minimum isolation duration;
wherein at least a portion of the cooling fluid enters the energy storage device at an angle relative to the primary outlet direction.

15. The method of claim 14, wherein:
directing the cooling fluid comprises zoned delivery of the fluid to preferentially cool high-temperature regions near the interface; and/or
the method further comprises routing the cooling fluid through a mesh or perforated interface structure positioned between the first and second major subcomponents, and regulating flow rate or direction of the cooling fluid based on temperature data collected from sensors positioned near the thermally isolable interface; and/or
the method further comprises introducing the cooling fluid through inlet features integrated into a venting manifold associated with the major component; and/or
the thermal isolation duration is at least five minutes under a defined detrimental thermal condition originating in one of the major subcomponents, and the step of maintaining thermal isolation includes limiting conductive, convective, and radiative thermal transfer using a thermal isolation material positioned at the interface.
